# EUROPEAN PATENT APPLICATION

(11) **EP 3 981 672 A1**
(43) Date of publication of application: **13.04.2022**
(21) Application number: 21201209.0
(22) Date of filing: 06.10.2021
(51) Int. Cl.: B62D 55/116, B62D 55/084, B62D 55/15, B62D 55/24

(54) **TRACK SYSTEM FOR TRACTION OF A VEHICLE**

(30) Priority: 06.10.2020 US 202063088308 P
(71) Applicant: Camso Inc., Magog, Québec J1X 0E6 (CA)
(72) Inventor: Poulin, Etienne, SHERBROOKE, J1J 2N1 (CA); Lussier, Alain, SAINT-FRANCOIS XAVIER DE BROMPTON, J0B 2V0 (CA); Couture, Frederic, SHERBROOKE, J1K 1S6 (CA); Gingras, David, MAGOG, J1X 0T2 (CA)
(74) Representative: Lavoix

(57) **Abstract**

A track system for a vehicle on a ground, wherein the track system may be designed to enhance ride quality (e.g., comfort), stability, load distribution on the ground, manoeuvrability (e.g., steerability), adaptability to ground and/or working conditions, and/or other aspects of the track system and/or the vehicle, such as by being movable relative to a frame of the vehicle (e.g., horizontally, vertically, and/or pivotally), resiliently supporting wheels of the track system (e.g., with elastomeric bushings or other components), and/or varying how much of the track engages the ground (e.g., reducing that to facilitate turning).

## Description

### FIELD

This disclosure relates generally to vehicles (e.g., construction vehicles, agricultural vehicles, etc.) and, more particularly, to track systems for traction of vehicles.

### BACKGROUND

Off-road vehicles, including construction vehicles (e.g., loaders, excavators, bulldozers, etc.), agricultural vehicles (e.g., tractors, harvesters, combines, etc.), forestry vehicles (e.g., feller-bunchers, knuckleboom loaders, etc.), military vehicles (e.g., combat engineering vehicles (CEVs), etc.), snowmobiles, and all-terrain vehicles (ATVs), may comprise track systems to enhance their traction and floatation on soft, slippery, and/or irregular grounds (e.g., soil, mud, etc.).

A vehicle's track system comprises a track-engaging assembly and a track that is driven around the track-engaging assembly, which may include a frame, track-contacting wheels, etc. The track system is typically designed taking into consideration how, where, and when the vehicle will be used (e.g., at construction sites, in agricultural fields, on roads, etc.). However, operating conditions of the vehicle (e.g., speeds, loads, ground characteristics, uses/applications, etc.) can vary, sometimes significantly, and the track system may not perform optimally under all these conditions (e.g., due to trade-offs and other decisions made during its design).

For these and other reasons, improvements for track systems of vehicles would be welcomed.

### SUMMARY

According to various aspects, this disclosure relates to a track system for a vehicle on a ground, wherein the track system may be designed to enhance ride quality (e.g., comfort), stability, load distribution on the ground, manoeuvrability (e.g., steerability), adaptability to ground and/or working conditions, and/or other aspects of the track system and/or the vehicle, such as by being movable relative to a frame of the vehicle (e.g., horizontally, vertically, and/or pivotally), resiliently supporting wheels of the track system (e.g., with elastomeric bushings or other components), and/or varying how much of the track engages the ground (e.g., reducing that to facilitate turning).

For example, according to an aspect, this disclosure relates to a track system for a vehicle on a ground. The track system comprises a track that is elastomeric and comprises a ground-engaging outer surface and an inner surface opposite to the ground-engaging outer surface; a track-engaging assembly configured to drive and guide the track around the track-engaging assembly, the track-engaging assembly comprising a plurality of track-contacting wheels and a frame supporting respective ones of the track-contacting wheels; and a mounting mechanism configured to mount the frame of the track system to a frame of the vehicle and allow movement of the track system relative to the frame of the vehicle.

According to another aspect, this disclosure relates to a track system for a vehicle on a ground. The track system comprises a track that is elastomeric and comprises a ground-engaging outer surface and an inner surface opposite to the ground-engaging outer surface; a track-engaging assembly configured to drive and guide the track around the track-engaging assembly, the track-engaging assembly comprising a plurality of track-contacting wheels and a frame supporting respective ones of the track-contacting wheels; and a mounting mechanism configured to mount the frame of the track system to a frame of the vehicle and comprising a plurality of actuators spaced apart in a longitudinal direction of the track system to control movement of the track system relative to the frame of the vehicle.

According to another aspect, this disclosure relates to a track system for a vehicle on a ground. The track system comprises a track that is elastomeric and comprises a ground-engaging outer surface and an inner surface opposite to the ground-engaging outer surface; a track-engaging assembly configured to drive and guide the track around the track-engaging assembly, the track-engaging assembly comprising a plurality of track-contacting wheels and a frame supporting respective ones of the track-contacting wheels; and a mounting mechanism configured to mount the frame of the track system to a frame of the vehicle and comprising a plurality of mounts spaced apart in a longitudinal direction of the track system to allow movement of the track system relative to the frame of the vehicle.

According to another aspect, this disclosure relates to a track system for a vehicle on a ground. The track system comprises a track that is elastomeric and comprises a ground-engaging outer surface and an inner surface opposite to the ground-engaging outer surface; a track-engaging assembly configured to drive and guide the track around the track-engaging assembly, the track-engaging assembly comprising a plurality of track-contacting wheels and a frame supporting respective ones of the track-contacting wheels; and a mounting mechanism configured to mount the frame of the track system to a frame of the vehicle, the mounting mechanism comprising a plurality of mounts spaced apart in a longitudinal direction of the track system to allow movement of the track system relative to the frame of the vehicle, each mount comprising a pivot and an actuator configured to control pivoting of the track system relative to the frame of the vehicle about the pivot of the mount.

According to another aspect, this disclosure relates to a track system for a vehicle on a ground. The track system comprises a track that is elastomeric and comprises a ground-engaging outer surface and an inner surface opposite to the ground-engaging outer surface; a track-engaging assembly configured to drive and guide the track around the track-engaging assembly, the track-engaging assembly comprising a plurality of track-contacting wheels and a frame supporting respective ones of the track-contacting wheels; and a mounting mechanism configured to mount the frame of the track system to a frame of the vehicle, the mounting mechanism comprising a plurality of mounts spaced apart in a longitudinal direction of the track system to allow movement of the track system relative to the frame of the vehicle, each mount comprising a pivot, the mounting mechanism being configured to control pivoting of the track system about the pivot of a first one of the mounts differently from pivoting of the track system about the pivot of a second one of the mounts.

According to another aspect, this disclosure relates to a track system for a vehicle on a ground. The track system comprises a track that is elastomeric and comprises a ground-engaging outer surface and an inner surface opposite to the ground-engaging outer surface; a track-engaging assembly configured to drive and guide the track around the track-engaging assembly, the track-engaging assembly comprising a plurality of track-contacting wheels and a frame supporting respective ones of the track-contacting wheels; and a mounting mechanism configured to mount the frame of the track system to a frame of the vehicle and translate the track system relative to the frame of the vehicle in a longitudinal direction of the vehicle.

According to another aspect, this disclosure relates to a track system for a vehicle on a ground. The track system comprises a track that is elastomeric and comprises a ground-engaging outer surface and an inner surface opposite to the ground-engaging outer surface; a track-engaging assembly configured to drive and guide the track around the track-engaging assembly, the track-engaging assembly comprising a plurality of track-contacting wheels and a frame supporting respective ones of the track-contacting wheels; and a mounting mechanism configured to mount the frame of the track system to a frame of the vehicle and translate the track system relative to the frame of the vehicle in a heightwise direction of the vehicle.

According to another aspect, this disclosure relates to a track system for a vehicle on a ground. The track system comprises a track that is elastomeric and comprises a ground-engaging outer surface and an inner surface opposite to the ground-engaging outer surface; a track-engaging assembly configured to drive and guide the track around the track-engaging assembly, the track-engaging assembly comprising a plurality of track-contacting wheels and a frame supporting respective ones of the track-contacting wheels; and a mounting mechanism configured to mount the frame of the track system to a frame of the vehicle, translate the track system relative to the frame of the vehicle in a longitudinal direction of the vehicle, and translate the track system relative to the frame of the vehicle in a heightwise direction of the vehicle.

According to another aspect, this disclosure relates to a track system for a vehicle on a ground. The track system comprising a track that is elastomeric and comprises a ground-engaging outer surface and an inner surface opposite to the ground-engaging outer surface; a track-engaging assembly configured to drive and guide the track around the track-engaging assembly, the track-engaging assembly comprising a plurality of track-contacting wheels and a frame supporting respective ones of the track-contacting wheels; and a mounting mechanism configured to mount the frame of the track system to a frame of the vehicle, translate the track system relative to the frame of the vehicle in a longitudinal direction of the vehicle, translate the track system relative to the frame of the vehicle in a heightwise direction of the vehicle, and pivot the track system relative to the frame of the vehicle about a pivot axis generally parallel to the longitudinal direction of the vehicle.

According to another aspect, this disclosure relates to a track system for a vehicle on a ground. The track system comprises a track that is elastomeric and comprises a ground-engaging outer surface and an inner surface opposite to the ground-engaging outer surface; a track-engaging assembly configured to drive and guide the track around the track-engaging assembly, the track-engaging assembly comprising a plurality of track-contacting wheels and a frame supporting respective ones of the track-contacting wheels; a mounting mechanism configured to mount the frame of the track system to a frame of the vehicle and move the track system relative to the frame of the vehicle from a first horizontal plane to a second horizontal plane offset from the first horizontal plane in a heightwise direction of the vehicle.

According to another aspect, this disclosure relates to a track system for a vehicle on a ground. The track system comprises a track that is elastomeric and comprises a ground-engaging outer surface and an inner surface opposite to the ground-engaging outer surface; a track-engaging assembly configured to drive and guide the track around the track-engaging assembly, the track-engaging assembly comprising a plurality of track-contacting wheels and a frame supporting respective ones of the track-contacting wheels; and a mounting mechanism configured to mount the frame of the track system to a frame of the vehicle and pivot the track system relative to the frame of the vehicle about a pivot axis generally parallel to a longitudinal direction of the track system; wherein the track comprises elastomeric material allowing the track to flex around the track-engaging assembly; and a plurality of cores disposed in the elastomeric material, extending transversally to a longitudinal direction of the track, and spaced apart in the longitudinal direction of the track.

According to another aspect, this disclosure relates to a plurality of track systems for a vehicle on a ground. Each track system comprises a track that is elastomeric and comprises a ground-engaging outer surface and an inner surface opposite to the ground-engaging outer surface; a track-engaging assembly configured to drive and guide the track around the track-engaging assembly, the track-engaging assembly comprising a plurality of track-contacting wheels and a frame supporting respective ones of the track-contacting wheels; and a mounting mechanism configured to mount the frame of the track system to a frame of the vehicle and control movement of the track system relative to the frame of the vehicle; wherein a first one of the track systems is mountable on a first lateral side of the vehicle; a second one of the track systems is mountable on a second lateral side of the vehicle opposite to the first lateral side of the vehicle; and the mounting mechanism of the first one of the track systems and the mounting mechanism of the second one of the track systems are configured to control the movement of the first one of the track systems relative to the frame of the vehicle differently from the movement of the second one of the track systems relative to the frame of the vehicle.

According to another aspect, this disclosure relates to a plurality of track systems for a vehicle on a ground. Each track system comprises a track that is elastomeric and comprises a ground-engaging outer surface and an inner surface opposite to the ground-engaging outer surface; a track-engaging assembly configured to drive and guide the track around the track-engaging assembly, the track-engaging assembly comprising a plurality of track-contacting wheels and a frame supporting respective ones of the track-contacting wheels; and a mounting mechanism configured to mount the frame of the track system to a frame of the vehicle and control movement of the track system relative to the frame of the vehicle; wherein a first one of the track systems is mountable on a first lateral side of the vehicle; a second one of the track systems is mountable on a second lateral side of the vehicle opposite to the first lateral side of the vehicle; and the mounting mechanism of the first one of the track systems and the mounting mechanism of the second one of the track systems are configured to position the first one of the track systems relative to the frame of the vehicle in a first horizontal plane and position the second one of the track systems relative to the frame of the vehicle in a second horizontal plane offset from the first horizontal plane in a heightwise direction of the vehicle.

According to another aspect, this disclosure relates to a track system for a vehicle on a ground. The track system comprises a track that is elastomeric and comprises a ground-engaging outer surface and an inner surface opposite to the ground-engaging outer surface; and a track-engaging assembly configured to drive and guide the track around the track-engaging assembly, the track-engaging assembly comprising a drive wheel configured to drive the track; a front idler wheel and a rear idler wheel spaced apart in a longitudinal direction of the track system; a plurality of roller wheels disposed between the front idler wheel and the rear idler wheel in the longitudinal direction of the track system; an axle for a given one of the front idler wheel, the rear idler wheel, and the roller wheels; and a resilient member receiving the axle and resiliently deformable about the axle; wherein the track comprises elastomeric material allowing the track to flex around the track-engaging assembly; and a plurality of cores disposed in the elastomeric material, extending transversally to a longitudinal direction of the track, and spaced apart in the longitudinal direction of the track.

According to another aspect, this disclosure relates to a track system for a vehicle on a ground. The track system comprises a track that is elastomeric and comprises a ground-engaging outer surface and an inner surface opposite to the ground-engaging outer surface; and a track-engaging assembly configured to drive and guide the track around the track-engaging assembly, the track-engaging assembly comprising: a drive wheel configured to drive the track; a front idler wheel and a rear idler wheel spaced apart in a longitudinal direction of the track system; a plurality of roller wheels disposed between the front idler wheel and the rear idler wheel in the longitudinal direction of the track system; an axle for a given one of the front idler wheel, the rear idler wheel, and the roller wheels; and a resilient member receiving the axle, resiliently deformable about the axle, and disposed outside the given one of the front idler wheel, the rear idler wheel, and the roller wheels in a widthwise direction of the track system.

According to another aspect, this disclosure relates to a track system for a vehicle on a ground. The track system comprises a track that is elastomeric and comprises a ground-engaging outer surface and an inner surface opposite to the ground-engaging outer surface; and a track-engaging assembly configured to drive and guide the track around the track-engaging assembly, the track-engaging assembly comprising: a drive wheel configured to drive the track; a front idler wheel and a rear idler wheel spaced apart in a longitudinal direction of the track system; a plurality of roller wheels disposed between the front idler wheel and the rear idler wheel in the longitudinal direction of the track system; an axle for a given one of the front idler wheel, the rear idler wheel, and the roller wheels; and an inboard resilient member and an outboard resilient member that receive the axle, are spaced from one another in a widthwise direction of the track system, and are resiliently deformable about the axle.

According to another aspect, this disclosure relates to a track system for a vehicle on a ground. The track system comprises a track that is elastomeric and comprises a ground-engaging outer surface and an inner surface opposite to the ground-engaging outer surface; and a track-engaging assembly configured to drive and guide the track around the track-engaging assembly, the track-engaging assembly comprising: a drive wheel configured to drive the track; a front idler wheel and a rear idler wheel spaced apart in a longitudinal direction of the track system; a plurality of roller wheels disposed between the front idler wheel and the rear idler wheel in the longitudinal direction of the track system; an axle for a given one of the front idler wheel, the rear idler wheel, and the roller wheels; a resilient member receiving the axle and resiliently deformable about the axle; wherein the given one of the front idler wheel, the rear idler wheel, and the roller wheels comprises a first lateral wheel member, a second lateral wheel member, and a central wheel member that is disposed between and spaced apart from the first lateral wheel member and the second lateral wheel member in a widthwise direction of the track system.

According to another aspect, this disclosure relates to a track system for a vehicle on a ground. The track system comprises a track that is elastomeric and comprises a ground-engaging outer surface and an inner surface opposite to the ground-engaging outer surface; and a track-engaging assembly configured to drive and guide the track around the track-engaging assembly, the track-engaging assembly comprising: a drive wheel configured to drive the track; a front idler wheel and a rear idler wheel spaced apart in a longitudinal direction of the track system; a plurality of roller wheels disposed between the front idler wheel and the rear idler wheel in the longitudinal direction of the track system; axles for the roller wheels; and resilient members receiving the axles and resiliently deformable about the axles; wherein the track comprises: elastomeric material allowing the track to flex around the track-engaging assembly; and a plurality of cores disposed in the elastomeric material, extending transversally to a longitudinal direction of the track, and spaced apart in the longitudinal direction of the track.

According to another aspect, this disclosure relates to a track system for a vehicle on a ground, the track system comprises a track that is elastomeric and comprises a ground-engaging outer surface and an inner surface opposite to the ground-engaging outer surface; and a track-engaging assembly configured to drive and guide the track around the track-engaging assembly, the track-engaging assembly comprising a drive wheel configured to drive the track; a front idler wheel and a rear idler wheel spaced apart in a longitudinal direction of the track system; a plurality of roller wheels disposed between the front idler wheel and the rear idler wheel in the longitudinal direction of the track system; axles for the roller wheels; and resilient members receiving the axles, resiliently deformable about the axles, and disposed outside the roller wheels in a widthwise direction of the track system.

According to another aspect, this disclosure relates to a track system for a vehicle on a ground. The track system comprises a track that is elastomeric and comprises a ground-engaging outer surface and an inner surface opposite to the ground-engaging outer surface; and a track-engaging assembly configured to drive and guide the track around the track-engaging assembly, the track-engaging assembly comprising a drive wheel configured to drive the track; a front idler wheel and a rear idler wheel spaced apart in a longitudinal direction of the track system; a plurality of roller wheels disposed between the front idler wheel and the rear idler wheel in the longitudinal direction of the track system; axles for the roller wheels; inboard resilient members and outboard resilient members that receive the axles, are spaced from one another in a widthwise direction of the track system, and are resiliently deformable about the axles.

According to another aspect, this disclosure relates to a track system for a vehicle on a ground. The track system comprises a track that is elastomeric and comprises a ground-engaging outer surface and an inner surface opposite to the ground-engaging outer surface; and a track-engaging assembly configured to drive and guide the track around the track-engaging assembly, the track-engaging assembly comprising: a drive wheel configured to drive the track; a front idler wheel and a rear idler wheel spaced apart in a longitudinal direction of the track system; a plurality of roller wheels disposed between the front idler wheel and the rear idler wheel in the longitudinal direction of the track system; axles for the roller wheels; resilient members receiving the axles and resiliently deformable about the axles; wherein each roller wheel of the roller wheels comprises a first lateral wheel member, a second lateral wheel member, and a central wheel member that is disposed between and spaced apart from the first lateral wheel member and the second lateral wheel member in a widthwise direction of the track system.

According to another aspect, this disclosure relates to a track system for a vehicle on a ground. The track system comprises a track that is elastomeric and comprises a ground-engaging outer surface and an inner surface opposite to the ground-engaging outer surface; and a track-engaging assembly configured to drive and guide the track around the track-engaging assembly, the track-engaging assembly comprising: a drive wheel configured to drive the track; a front idler wheel and a rear idler wheel spaced apart in a longitudinal direction of the track system; a plurality of roller wheels disposed between the front idler wheel and the rear idler wheel in the longitudinal direction of the track system; and a reconfiguration mechanism to alter a shape of a bottom run of the track beneath the roller wheels to vary a contact patch of the track with the ground.

According to another aspect, this disclosure relates to a track system for a vehicle on a ground. The track system comprises a track that is elastomeric and comprises a ground-engaging outer surface and an inner surface opposite to the ground-engaging outer surface; and a track-engaging assembly configured to drive and guide the track around the track-engaging assembly, the track-engaging assembly comprising: a drive wheel configured to drive the track; a front idler wheel and a rear idler wheel spaced apart in a longitudinal direction of the track system; a plurality of roller wheels disposed between the front idler wheel and the rear idler wheel in the longitudinal direction of the track system; and a reconfiguration mechanism to alter a shape of a bottom run of the track beneath the roller wheels to reduce a contact patch of the track with the ground when the vehicle is turning.

According to another aspect, this disclosure relates to a track system for a vehicle on a ground. The track system comprises a track that is elastomeric and comprises a ground-engaging outer surface and an inner surface opposite to the ground-engaging outer surface; and a track-engaging assembly configured to drive and guide the track around the track-engaging assembly, the track-engaging assembly comprising a drive wheel configured to drive the track; a front idler wheel and a rear idler wheel spaced apart in a longitudinal direction of the track system; a plurality of roller wheels disposed between the front idler wheel and the rear idler wheel in the longitudinal direction of the track system; and a reconfiguration mechanism to alter a shape of a bottom run of the track beneath the roller wheels to vary a contact patch of the track with the ground, the reconfiguration mechanism being configured to vary a dimension of the contact patch in the longitudinal direction of the track system and a dimension of the contact patch in a widthwise direction of the track system.

According to another aspect, this disclosure relates to a track system for a vehicle on a ground. The track system comprises a track that is elastomeric and comprises a ground-engaging outer surface and an inner surface opposite to the ground-engaging outer surface; and a track-engaging assembly configured to drive and guide the track around the track-engaging assembly, the track-engaging assembly comprising a drive wheel configured to drive the track; a front idler wheel and a rear idler wheel spaced apart in a longitudinal direction of the track system; a plurality of roller wheels disposed between the front idler wheel and the rear idler wheel in the longitudinal direction of the track system; and a reconfiguration mechanism to alter a shape of a bottom run of the track beneath the roller wheels to vary a contact patch of the track with the ground, the reconfiguration mechanism comprising a track-pressing member configured to press upon the bottom run of the track beneath the roller wheels.

According to another aspect, this disclosure relates to a track system for a vehicle on a ground. The track system comprises a track that is elastomeric and comprises a ground-engaging outer surface and an inner surface opposite to the ground-engaging outer surface; and a track-engaging assembly configured to drive and guide the track around the track-engaging assembly, the track-engaging assembly comprising: a drive wheel configured to drive the track; a front idler wheel and a rear idler wheel spaced apart in a longitudinal direction of the track system; a plurality of roller wheels disposed between the front idler wheel and the rear idler wheel in the longitudinal direction of the track system; and a reconfiguration mechanism to alter a shape of a bottom run of the track beneath the roller wheels to vary a contact patch of the track with the ground; wherein the track comprises elastomeric material allowing the track to flex around the track-engaging assembly; and a plurality of cores disposed in the elastomeric material, extending transversally to a longitudinal direction of the track, and spaced apart in the longitudinal direction of the track.

These and other aspects of this disclosure will now become apparent to those of ordinary skill in the art upon review of a description of embodiments in conjunction with accompanying drawings.

### BRIEF DESCRIPTION OF DRAWINGS

A detailed description of embodiments is provided below, by way of example only, with reference to the accompanying drawings, in which:
Figure 1 shows an example of a vehicle comprising a track system in accordance with an embodiment;
Figures 2 and 3 show a perspective view and a side view of the track system;
Figures 4 and 5 show an inner plan view and a cross-sectional view of a track of the track system;

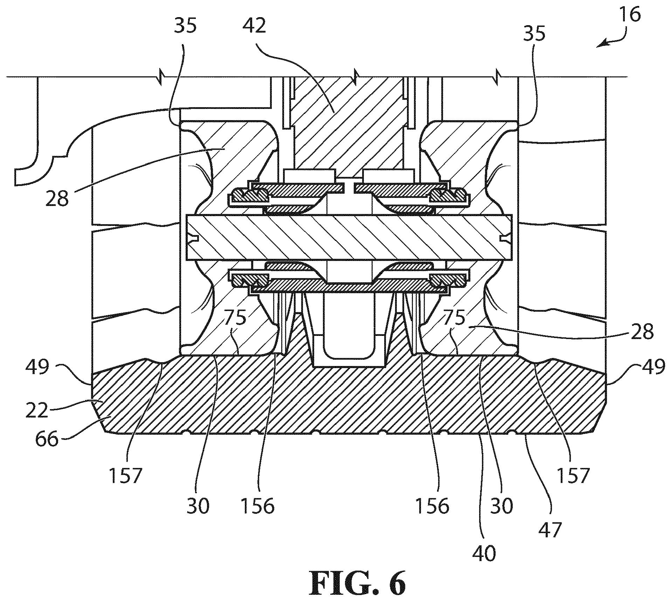

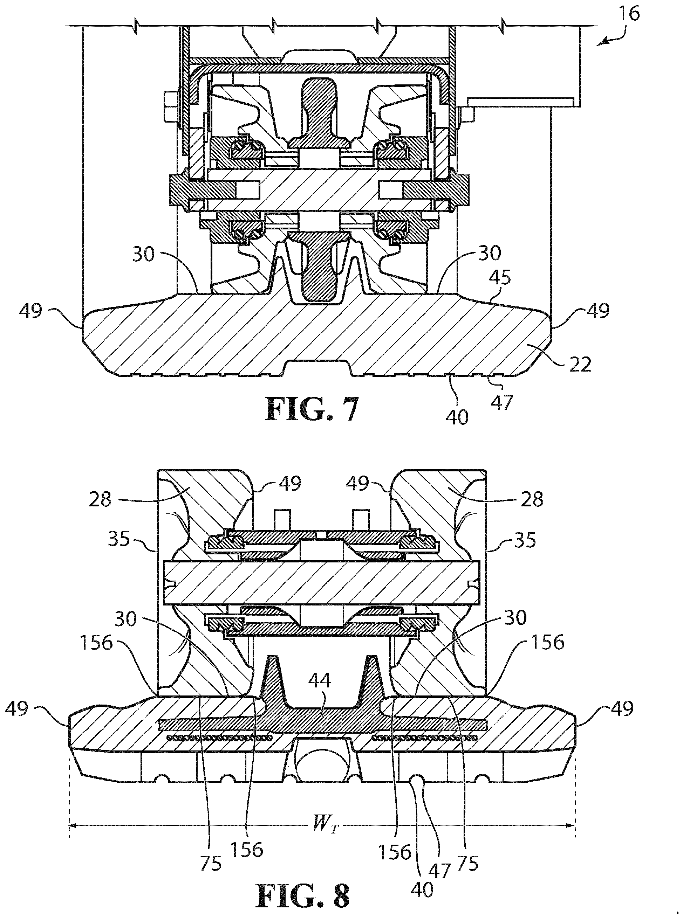

Figures 6 to 8 show examples of a wheel of the track system in relation to the track;
Figures 9 to 10 show a perspective view of a resilient member disposed outside a roller wheel;
Figure 11 shows a cross-sectional view of the resilient member;

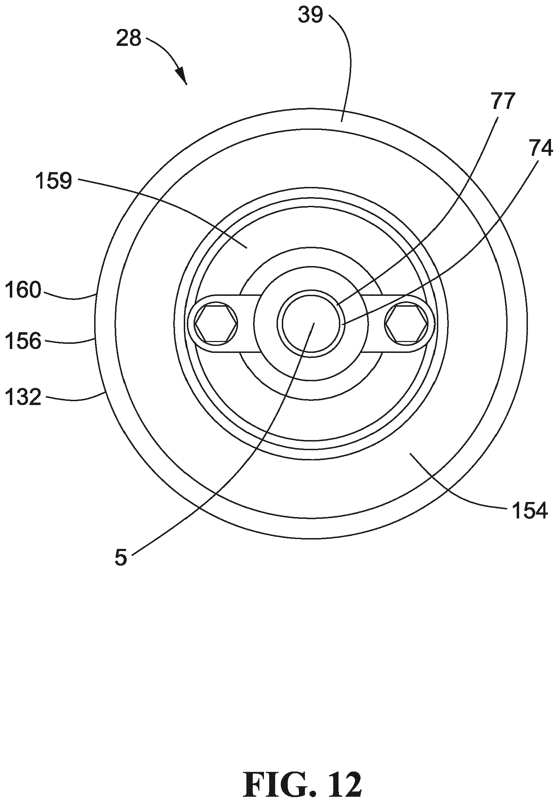

Figure 12 shows a front view of the roller wheel;
Figures 13 shows a perspective view of a mounting mechanism;
Figure 14 shows an embodiment of the mounting mechanism comprising a hydraulic control;
Figure 15 shows an embodiment of the mounting mechanism comprising an elastomeric control;
Figures 16 to 17 show examples of degrees of freedom of the mounting mechanism;
Figure 18 shows a translation of the track system in a longitudinal direction;
Figure 19 shows a translation of the track system in a heightwise direction;
Figure 20 shows pivoting of the track system about a front pivot of the track system greater than pivoting of the track system about a rear pivot of the track system;
Figure 21 shows pivoting of the track system about the rear pivot of the track system greater than pivoting of the track system about the front pivot of the track system;
Figure 22 shows pivoting of the track system about the front pivot of the track system;
Figure 23 shows pivoting of the track system about the rear pivot of the track system;

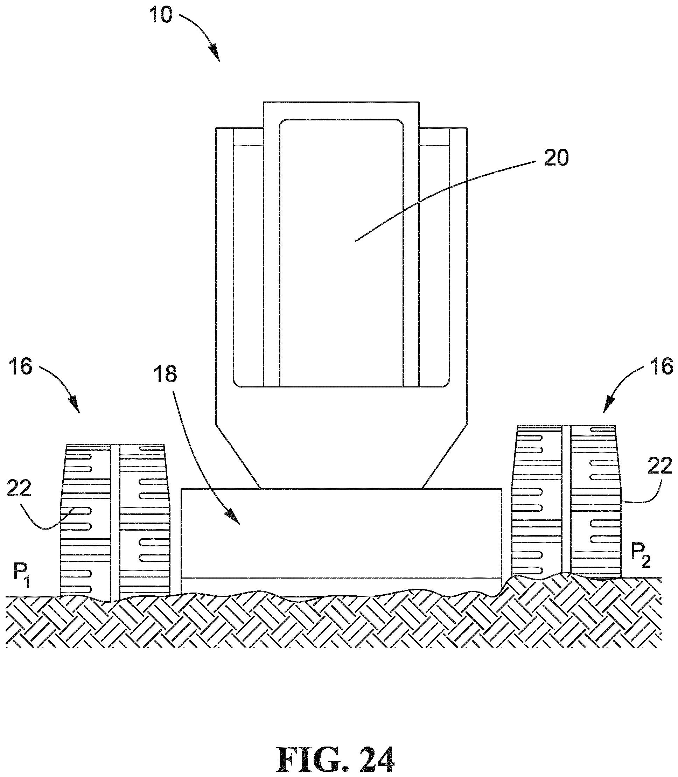

Figure 24 shows a front view of the vehicle with the track system on different planes;
Figure 25 shows pivoting of the track system relative to the frame of the vehicle;

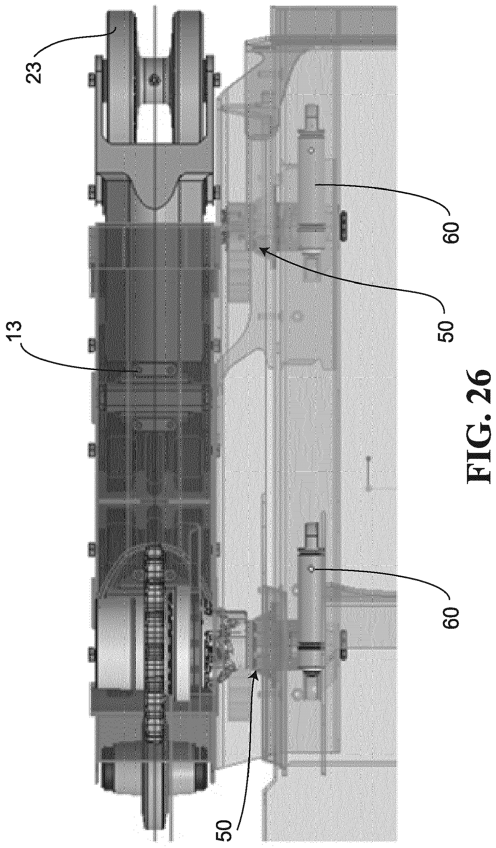

Figure 26 shows a top view of the mounting mechanism;
Figure 27 shows an embodiment of a reconfiguration mechanism of the track system;
Figures 28 to 30 show block diagrams of the track system including the mounting mechanism;
Figure 31 shows a block diagram of the track system in relation to a control system;
Figure 32 shows a block diagram of the mounting mechanism;
Figures 33 to 35 show block diagrams of a processing apparatus in relation to a sensor;
Figure 36 shows a block diagram of a user interface of the vehicle;
Figures 37 to 39 show a communication device in accordance with an embodiment;
Figure 40 to 42 show block diagrams of the track system including the reconfiguration mechanism;
Figure 43 shows a block diagram of the track system in relation to the control system;
Figure 44 shows a block diagram of the reconfiguration mechanism; and
Figure 45 shows a suspension of the mounting mechanism.

It is to be expressly understood that the description and drawings are only for purposed of illustrating certain embodiments and are an aid for understanding. They are not intended to be and should not be limiting.

### DETAILED DESCRIPTION OF EMBODIMENTS

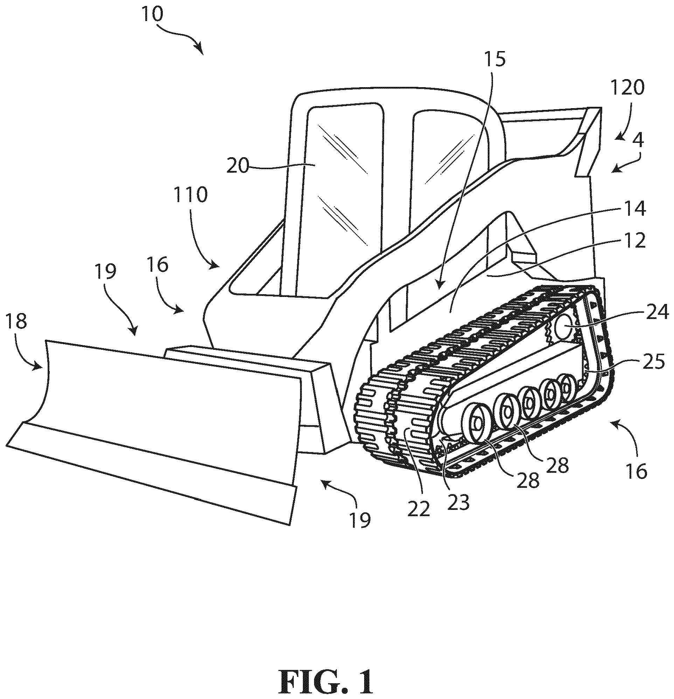

Figure 1 shows an embodiment of a vehicle 10 comprising track systems 16 including tracks 22 for traction of the vehicle 10 on a ground. In this embodiment, the vehicle 10 is a heavy-duty work vehicle for performing construction, agricultural, or other industrial work or military work. More particularly, in this embodiment, the vehicle 10 is a construction vehicle. Specifically, in this example, the construction vehicle 10 is a compact track loader. In other examples, the construction vehicle 10 may be another type of loader, a bulldozer, an excavator, etc.

In this embodiment, the vehicle 10 comprises a frame 12, a powertrain 15, the track systems 16, and an operator cabin 20 for an operator to move the vehicle 10 on the ground to perform work using a work implement 18. The vehicle 10 has a longitudinal direction, a widthwise direction, and a heightwise direction that is normal to its longitudinal and widthwise directions.

As further discussed later, in this embodiment, the track systems 16 may be designed to enhance ride quality (e.g., comfort), stability, load distribution on the ground, manoeuvrability (e.g., steerability), adaptability to ground and/or working conditions, and/or other aspects of the track systems 16 and/or the vehicle 10, such as by being movable relative to the frame 12 of the vehicle 10 (e.g., horizontally, vertically, and/or pivotally), resiliently supporting wheels that contact their tracks 22 (e.g., with elastomeric bushings or other components), and/or varying how much of their tracks 22 engages the ground (e.g., reducing that to facilitate turning).

The powertrain 15 is configured to generate motive power for the track systems 16 to propel the vehicle 10 on the ground. To that end, the powertrain 15 comprises a prime mover 14 which is a source of motive power that comprises one or more motors. For example, in this embodiment, the prime mover 14 comprises an internal combustion engine. In other embodiments, the prime mover 14 may comprise another type of motor (e.g., an electric motor) or a combination of different types of motor (e.g., an internal combustion engine and an electric motor). Motive power generated by the prime mover 14 is applied to the track systems 16. In some embodiments, the powertrain 15 may transmit power from the prime mover 14 to the track systems 16 via a transmission, a differential, and/or any other suitable mechanism. In other embodiments, at least part of the powertrain 15 (e.g., a motor and/or a transmission) may be part of one or more of the track systems 16.

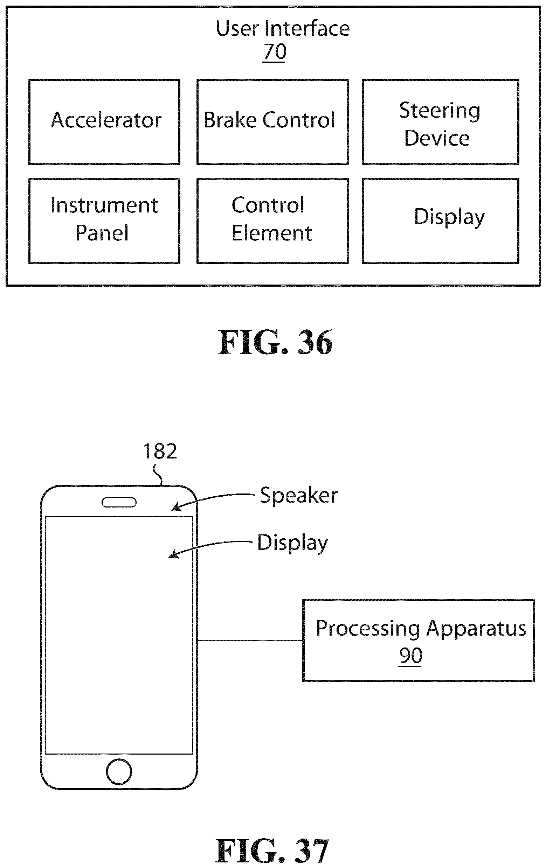

The operator cabin 20 is where the operator sits and controls the vehicle 10. With additional reference to Figure 36, the operator cabin 20 comprises a user interface 70 including a set of controls that allow the operator to steer the vehicle 10 on the ground and operate the work implement 18. For example, in this embodiment, the user interface 70 comprises an accelerator, a brake control, and a steering device that are operable by the operator to control motion of the vehicle 10 on the ground and operation of the work implement 18. The user interface 70 also comprises an instrument panel (e.g., a dashboard) which provides indicators (e.g., a speedometer indicator, a tachometer indicator, etc.) to convey information to the operator.

The work implement 18 is operable to perform work. In this embodiment, the work implement 18 comprises a bucket for moving soil, debris or other material. In this example, the vehicle 10 comprises support arms 19 carrying the work implement 18 and mounted to a rear part 4 of the frame 12 so that they extend forwardly pass the operator cabin 20. In other embodiments, the work implement 18 may comprise a dozer blade, a backhoe, a fork, a grapple, a scraper pan, an auger, a saw, a ripper, a material-handling arm, or any other type of work implement 18. In still other embodiments, the vehicle 10 may not comprise a work implement 18.

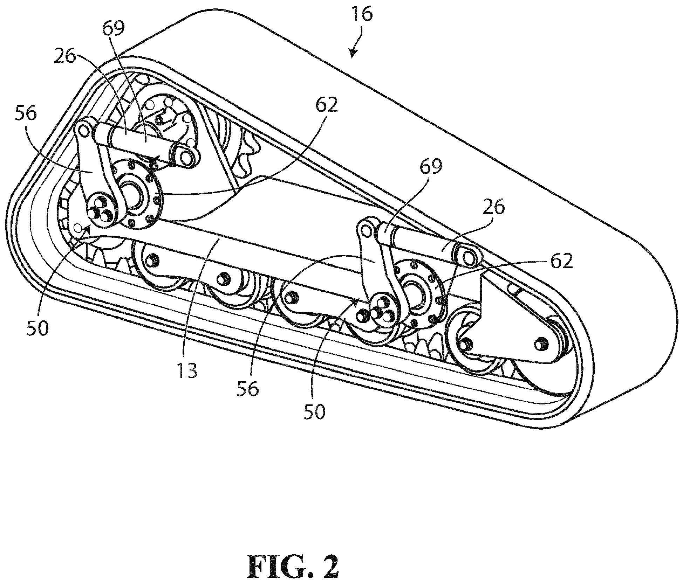

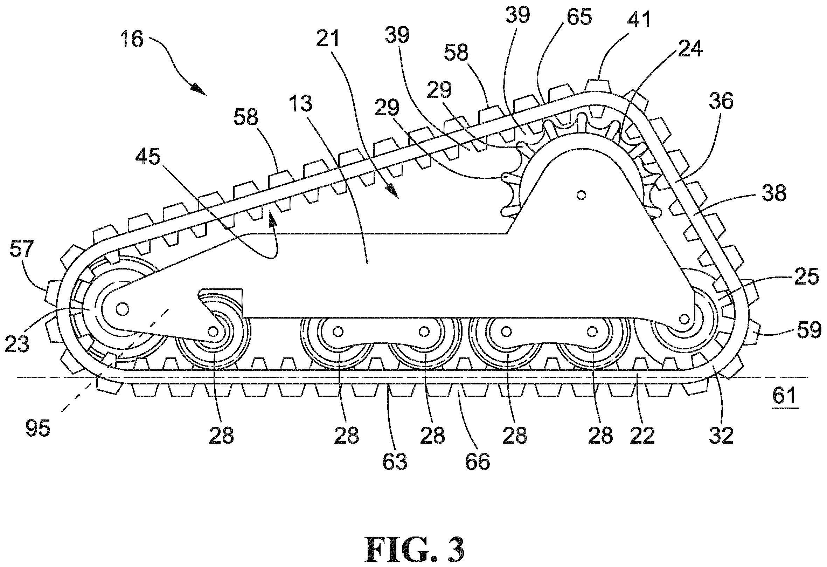

The track systems 16 engage the ground to propel the vehicle 10. With additional reference to Figures 2 and 3, each track system 16 comprises a track-engaging assembly 21 and the track 22 disposed around the track-engaging assembly 21. In this embodiment, the track-engaging assembly 21 comprises a plurality of track-contacting wheels which are configured to drive and guide the track 22 around the track-engaging assembly 21 and which, in this example, includes a drive wheel 24 and a plurality of idler wheels that includes a front (i.e., leading) idler wheel 23, a rear (i.e., trailing) idler wheel 25, and roller wheels 28 disposed between the front idler wheel 23 and the rear idler wheel 25 in the longitudinal direction of the track system 16. The track system 16 also comprises a frame 13 which supports various components of the track system 16, including the wheels 24, 23, 25, 28. In this embodiment, the vehicle 10 can be steered by operating the track systems 16 differently, such as by moving their tracks 22 at different speeds and/or in different directions.

The track system 16 has a longitudinal direction and a front longitudinal end 57 and a rear longitudinal end 59 that define a length of the track system 16 along a longitudinal axis 61 that defines the longitudinal direction of the track system 16. The track system 16 has a widthwise direction and a width that is defined by a width W_{T} of the track 22. The track system 16 also has a heightwise direction that is normal to its longitudinal and widthwise directions.

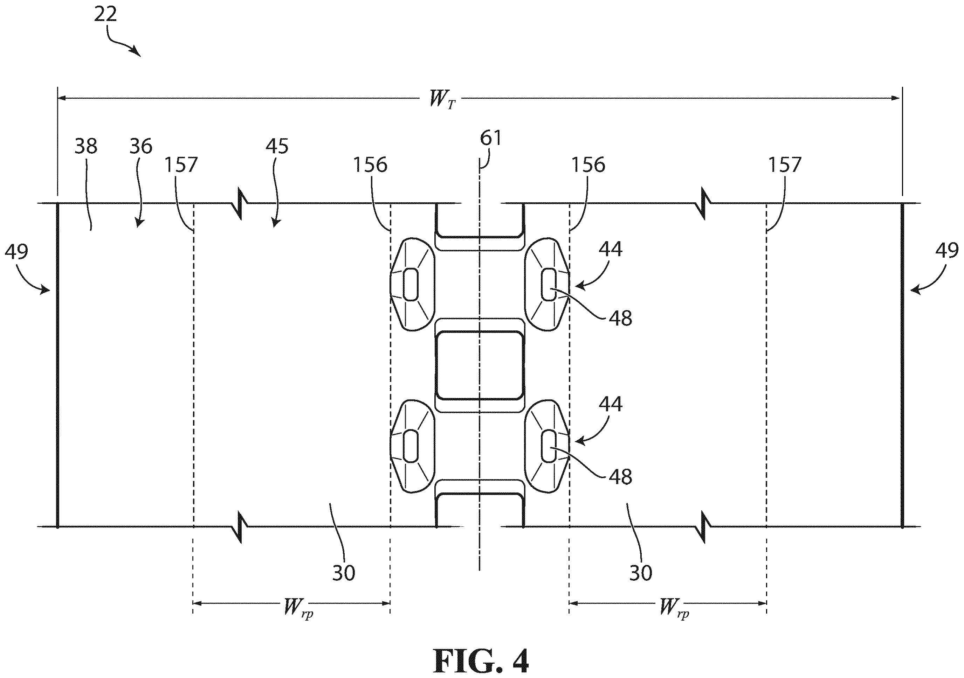

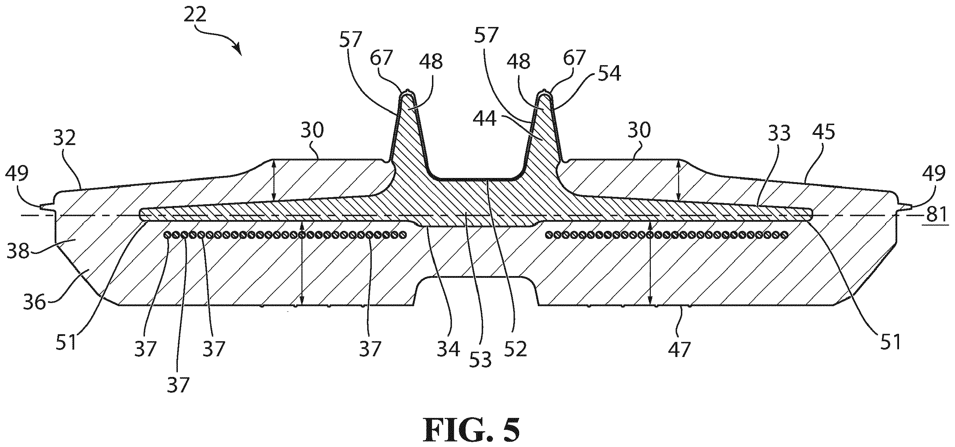

The track 22 engages the ground to provide traction to the vehicle 10. A length of the track 22 allows the track 22 to be mounted around the track-engaging assembly 21. In view of its closed configuration without ends that allows it to be disposed and moved around the track-engaging assembly 21, the track 22 can be referred to as an "endless" track. With additional reference to Figures 3 to 5, the track 22 comprises an inner surface 45, a ground-engaging outer surface 47, and lateral edges 49. The inner surface 45 faces the wheels 24, 23, 25, 28, while the ground-engaging outer surface 47 engages the ground. In this embodiment, with additional reference to Figure 3, a top run 65 of the track 22 extends between the longitudinal ends 57, 59 of the track system 16 and over the wheels 24, 23, 25, 28, whereas a bottom run 66 of the track 22 extends between the longitudinal ends 57, 59 of the track system 16 and under the wheels 24, 23, 25, 28. The bottom run 66 of the track 22 defines an area of contact 63 of the track 22 with the ground which generates traction and bears a majority of a load on the track system 16, and which will be referred to as a "contact patch" of the track 22 with the ground. The track 22 has a longitudinal axis 81 which defines a longitudinal direction of the track 22 (i.e., a direction generally parallel to its longitudinal axis) and transversal directions of the track 22 (i.e., directions transverse to its longitudinal axis), including a widthwise direction of the track 22 (i.e., a lateral direction generally perpendicular to its longitudinal axis). The track 22 has a thicknesswise direction normal to its longitudinal and widthwise directions.

The track 22 is elastomeric, i.e., comprises elastomeric material 32, to be flexible around the track-engaging assembly 21. The elastomeric material 32 of the track 22 can include any polymeric material with suitable elasticity. In this embodiment, the elastomeric material 32 of the track 22 includes rubber. Various rubber compounds may be used, and in some cases, different rubber compounds may be present in different areas of the track 22. In other embodiments, the elastomeric material 32 of the track 22 may include another elastomer in addition to or instead of rubber (e.g., polyurethane elastomer).

More particularly, the track 22 comprises an endless body 36 underlying its inner surface 45 and ground-engaging outer surface 47. In view of its underlying nature, the endless body 36 will be referred to as a "carcass". The carcass 36 is elastomeric in that it comprises elastomeric material 38 which allows the carcass 36 to elastically change in shape and thus the track 22 to flex as it is in motion around the track-engaging assembly 21.

In this embodiment, the track 22 comprises internal reinforcements disposed in its elastomeric material 32, including the elastomeric material 38 of the carcass 36.

For example, in this embodiment, the track 22 comprises a plurality of cores 44 disposed in the elastomeric material 38 of the carcass 36. The cores 44, which may in some cases also be referred to as "inserts", are distributed along and extend transversally to the longitudinal direction of the track 22, and are spaced apart in the longitudinal direction of the track 22 to impart transverse rigidity to the track 22. The cores 44 may also help to drive the track 22 by engagement with the drive wheel 24 and/or guide the track 22 by contacting the wheels 23, 25, 28 as the track 22 is driven by the drive wheel 24.

Each core 44 is embedded in the elastomeric material 38 of the carcass 36 in that at least a substantial part of the core 44 is disposed in the elastomeric material 38 of the carcass 36. In some cases, an entirety of the core 44 may be covered by the elastomeric material 32 of the track 22 (e.g., when the track 22 is new). In other cases, a portion of the core 44 may be exposed and uncovered by the elastomeric material 32 of the track 22 (e.g., when the track 22 has undergone degradation during use). The core 44 has a longitudinal axis extending transversally to the longitudinal axis of the track 22 and defining a longitudinal direction of the core 44. In this example, the longitudinal axis of the core 44 extends perpendicularly to the longitudinal axis of the track 22, such that it is oriented in the widthwise direction of the track 22.

More particularly, in this embodiment, the core 44 comprises a pair of wings 51 (i.e., extensions) and a wheel engager 53 configured to engage the track-contacting wheels and disposed between the wings 51. The wings 51 are elongated along the longitudinal axis 81 of the core 44 and extend from the wheel engager 53 to impart transverse rigidity to the track 22. Each of the wings 51 has an inner surface 33 oriented towards the inner side surface 45 of the track 22 and an outer surface 34 oriented towards the ground-engaging outer surface 47 of the track 22. In this embodiment, each of the wings 51 has a tapered shape whereby its inner surface 33 and its outer surface 34 converge towards one another towards a given one of the longitudinal ends of the core 44. The wings 51 may have any other shape in other embodiments.

The wheel engager 53 is configured to engage respective ones of the wheels 23, 25, 28 as the track 22 is driven by the drive wheel 24. More particularly, in this embodiment, the wheel engager 53 comprises a drive portion 52 for engaging the drive wheel 24 to drive the track 22 and a wheel guide 54 that projects from the inner surface 45 of the track 22 to contact the roller wheels 28 to help guide the track 22. In this example, the wheel guide 54 comprises a pair of guide projections 57 that project from the inner surface 45 of the track 22. The wheel engager 53 may be configured in various other ways in other embodiments (e.g., it may comprise only one guide projection or more than two (2) guide projections, etc.).

The core 44 may be made in any suitable way. In this embodiment, the core 44, including its wings 51 and its wheel engager 53, is made of metallic material. More particularly, in this embodiment, the core 44 may be made of steel formed into shape by casting. The core 44 may have various other shapes, may comprise various other components, may be made of various other materials (e.g., polymers, ceramics, composites, etc.), and/or may be made using various other processes (e.g., forging, welding, fastening, etc.) in other embodiments.

In this embodiment, the carcass 36 comprises a layer of reinforcing cables 37 that are adjacent to one another and extend generally in the longitudinal direction of the track 22 to enhance the strength in tension of the track 22 along its longitudinal direction. In this case, each of the reinforcing cables 37 is a cord including a plurality of strands (e.g., textile fibers or metallic wires). In other cases, each of the reinforcing cables 37 may be another type of cable and may be made of any material suitably flexible along the cable's longitudinal axis (e.g., fibers or wires of metal, plastic or composite material).

In some embodiments, the carcass 36 may comprise a layer of reinforcing fabric. The reinforcing fabric comprises thin pliable material made usually by weaving, felting, knitting, interlacing, or otherwise crossing natural or synthetic elongated fabric elements, such as fibers, filaments, strands and/or others, such that some elongated fabric elements extend transversally to the longitudinal direction of the track 22 to have a reinforcing effect in a transversal direction of the track 22. For instance, the reinforcing fabric may comprise a ply of reinforcing woven fibers (e.g., nylon fibers or other synthetic fibers).

The carcass 36 may be molded into shape in a molding process during which the rubber 38 is cured. For example, in this embodiment, a mold may be used to consolidate layers of rubber providing the rubber 38 of the carcass 36, the cores 44, and the reinforcing cables 37.

In this embodiment, the track 22 comprises wheel-contacting projections 48 that project from the inner surface 45 of the track 22 and are positioned to contact respective ones of the wheels 24, 23, 25, 28 to do at least one of guiding the track 22 and driving (i.e., imparting motion to) the track 22. Since each of them is used to do at least one of guiding the track 22 and driving the track 22, the wheel-contacting projections 48 can be referred to as "guide/drive projections". In this embodiment, each guide/drive projection 48 interacts with respective ones of the idler wheels 23, 25, 28 to guide the track 22 to maintain proper track alignment and prevent de-tracking without being used to drive the track 22, in which case the guide/drive projection 48 is a guide projection. In other embodiments, a guide/drive projection 48 may interact with the drive wheel 24 to drive the track 22, in which case the guide/drive projection 48 is a drive projection. In yet other embodiments, a guide/drive projection 48 may both (i) interact with the drive wheel 24 to drive the track and (ii) interact with respective ones of the idler wheels 23, 25, 28 to guide the track 22 to maintain proper track alignment and prevent de-tracking, in which case the guide/drive projection 48 is both a drive projection and a guide projection.

In this embodiment, each guide projection 48 of the track 22 comprises elastomeric material 67 overlying a given one of the cores 44. More particularly, in this embodiment, each guide projection 48 of the track 22 includes the guide projection 57 of the core 44 that is overlaid by the elastomeric material 67 (e.g., when the track 22 is new). The elastomeric material 67 can be any polymeric material with suitable elasticity. More particularly, in this embodiment, the elastomeric material 67 includes rubber. Various rubber compounds may be used, and, in some cases, different rubber compounds may be present in different areas of the drive/guide projection 48. The elastomeric material 67 of the guide projection 48 may be provided on the inner side surface 45 of the track 22 in various ways. For example, in this embodiment, the elastomeric material 67 of the guide projection 48 is provided by being molded with the carcass 36.

In this embodiment, the inner surface 45 of the track 22 comprises rolling paths 30 on which the roller wheels 28 roll to apply the bottom run 66 of the track 22 onto the ground. Each of the rolling paths 30 of the track 22 comprises an inner lateral edge 156 and an outer lateral edge 157 that define a width Wᵣₚ of that rolling path 30. In this example, a peripheral surface 75 of each roller wheel 28 between an outer lateral surface 35 and an inner lateral surface 42 of the roller wheel 28 is in rolling contact with a given one of the rolling paths 30 of the track 22. The roller wheels 28 roll on the rolling paths 30 of the track 22 along the bottom run 66 of the track 22 to apply it onto the ground. As they are located between frontmost and rearmost ones of the wheels of the track system 16, the roller wheels 28 can be referred to as "mid-rollers".

The ground-engaging outer surface 47 of the track 22 comprises a tread pattern 40 to enhance traction on the ground. The tread pattern 40 comprises a plurality of traction projections 58 projecting from the ground-engaging outer surface 47, spaced apart in the longitudinal direction of the track 22 and engaging the ground to enhance traction. The traction projections 58 may be referred to as "tread projections" or "traction lugs". The traction lugs 58 may have any suitable shape (e.g., curved shapes, shapes with straight parts and curved parts, etc.).

In this embodiment, each traction lug 58 is an elastomeric traction lug in that it comprises elastomeric material 41. The elastomeric material 41 can be any polymeric material with suitable elasticity. More particularly, in this embodiment, the elastomeric material 41 includes rubber. Various rubber compounds may be used, and, in some cases, different rubber compounds may be present in different areas of the traction lug 58. In other embodiments, the elastomeric material 41 may include another elastomer in addition to or instead of rubber (e.g., polyurethane elastomer).

The traction lugs 58 may be provided on the ground-engaging outer surface 47 of the track 22 in various ways. For example, in this embodiment, the traction lugs 58 are provided on the ground-engaging outer surface 47 of the track 22 by being molded with the carcass 36.

The drive wheel 24 is rotatable by power derived from the powertrain 15 to drive the track 22. In this embodiment, the drive wheel 24 is a drive sprocket comprising a plurality of drive members 29 spaced apart circumferentially to engage the drive portion 52 of each of the cores 44 in order to drive the track 22. In this example, the track 22 comprises drive voids 39 (e.g., recesses or holes) to receive the drive members 29 of the drive wheel 24.

The idler wheels 23, 25, 28 are not driven by power supplied by the powertrain 15, but are rather used to do at least one of supporting part of a weight of the vehicle 10 on the ground via the track 22, guiding the track 22 as it is driven by the drive wheel 24, and tensioning the track 22. More particularly, in this embodiment, the front and rear idler wheels 23, 25 maintain the track 22 in tension and help to support part of the weight of the vehicle 10 on the ground via the track 22.

In this example, the track system 16 comprises a tensioner 95 configured to control tension of the track 22. For instance, in this embodiment, the tensioner 95 comprises an actuator mounted at one end to the frame 13 of the track system 16 and at another end to a hub of the front idler wheel 23. This allows the tensioner 95 to modify a distance between the front idler wheel 23 and the rear idler wheel 25 in the longitudinal direction of the track system 16, thereby affecting the tension of the track 22. More specifically, in this example, the tensioner 95 is a hydraulic tensioner.

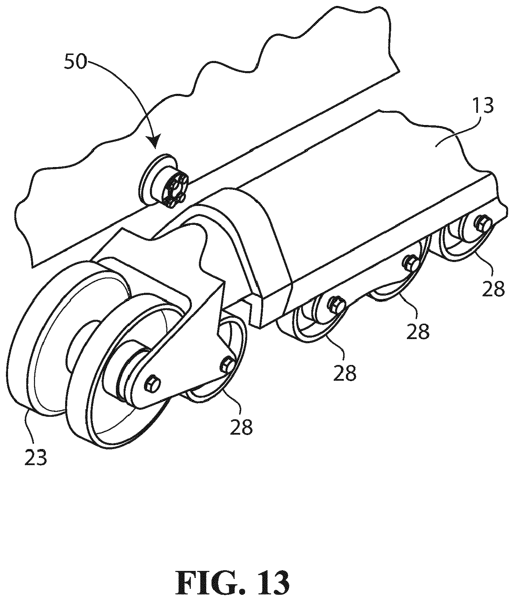

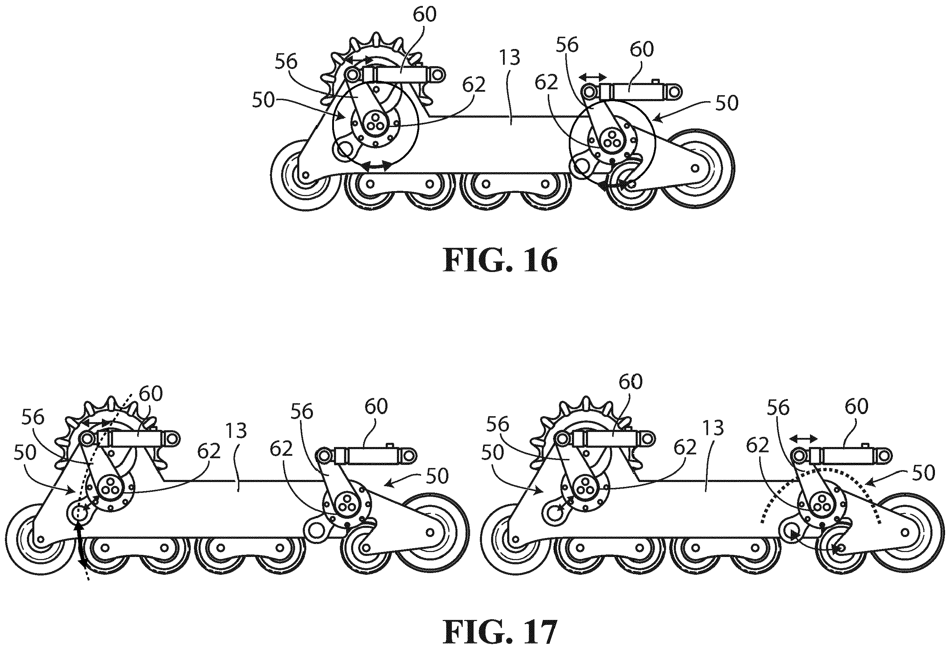

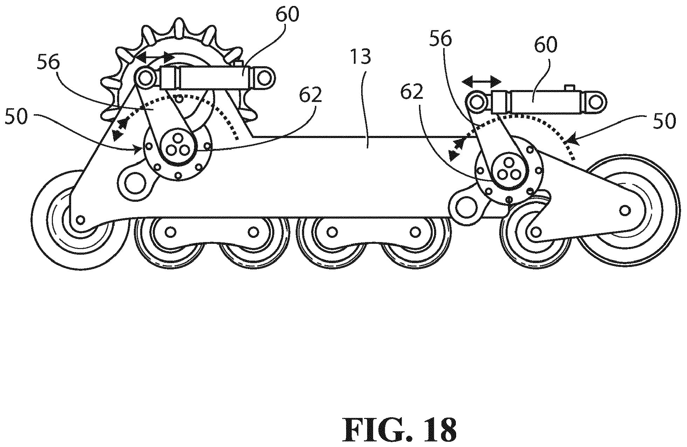

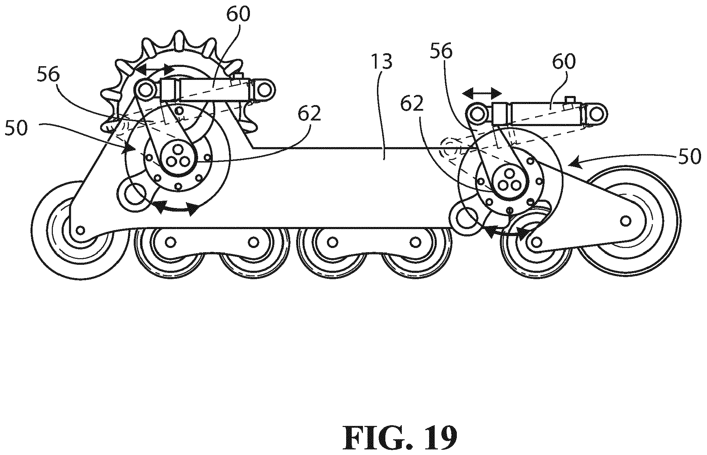

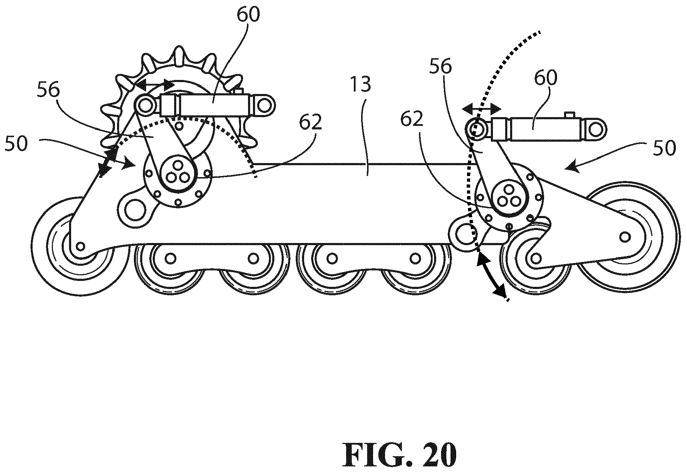

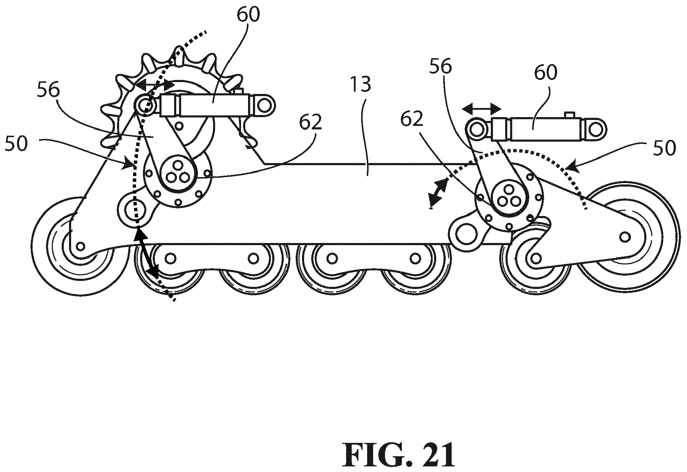

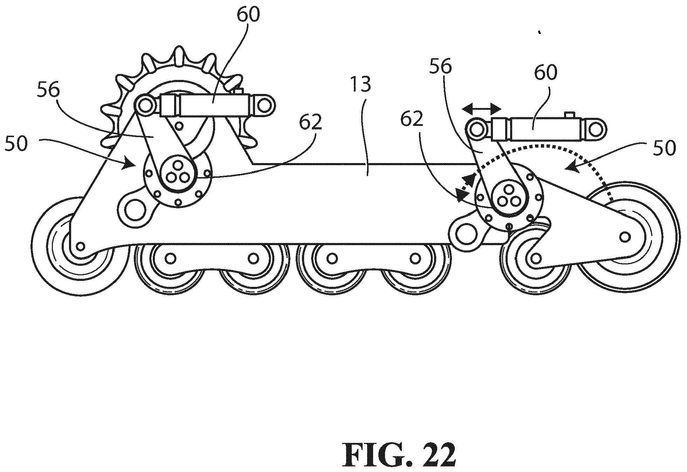

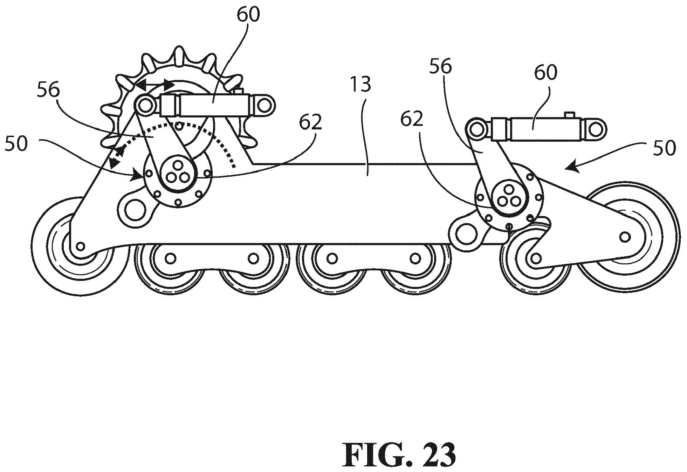

In this embodiment, with additional reference to Figures 13 to 23, the track system 16 comprises a mounting mechanism 50 configured to mount the frame 13 of the track system 16 to the frame 12 of the vehicle 10 and allow movement of the frame 13 of the track system 16 relative to the frame 12 of the vehicle 10. Thus, in this embodiment, as the frame 13 of the track system 16 supports all the front and rear idler wheels 23, 25, the roller wheels 28 and the drive wheel 24 which guide and move the track 22, the mounting mechanism 50 allows the track system 16 as a whole to be movable relative to the frame 12 of the vehicle 10.

For example, in some embodiments, as further discussed below, the mounting mechanism 50 may be configured to translate the track system 16 relative to the frame 12 of the vehicle 10 in the longitudinal direction of the vehicle 10 (e.g., horizontally), translate the track system 16 relative to the frame 12 of the vehicle 10 in the heightwise direction of the vehicle 10 (e.g., vertically), and/or pivot the track system 16 relative to the frame 12 of the vehicle 10 (e.g., about one or more pivot axes that may be generally parallel to the widthwise direction of the track system 16 and/or generally parallel to the longitudinal direction of the track system 16).

For instance, in some embodiments, the mounting mechanism 50 may be configured to allow the movement of the track system 16 relative to the frame 12 of the vehicle 10 based on operating conditions, such as current use of the vehicle 10 (e.g., a current application for which the vehicle 10 is used, such as grading, plowing, etc.); loading on the vehicle 10 (e.g., at the work implement 18); motion of the vehicle 10 such as a speed of the vehicle 10 and/or a direction of motion (e.g., turning) of the vehicle 10; a characteristic of the ground (e.g., a compliance such as a hardness or softness of the ground; different ground levels such as a road, sidewalk, curb, etc.); a center of gravity of the vehicle 10; a position of the work implement 18 (e.g., a reaching height); and/or various other operating conditions.

In some cases, the mounting mechanism 50 may be configured to allow the movement of the track system 16 relative to the frame 12 of the vehicle 10 while the vehicle 10 is stationary (e.g., before the vehicle 10 starts working or otherwise while the vehicle 10 is paused or idle).

In other cases, the mounting mechanism 50 may be configured to allow the movement of the track system 16 relative to the frame 12 of the vehicle 10 while the vehicle 10 is moving on the ground.

In this embodiment, the mounting mechanism 50 is configured to control the movement of the track system 16 relative to the frame 12 of the vehicle 10.

More particularly, in this embodiment, the mounting mechanism 50 comprises an actuation apparatus 69 including one or more actuators 60 configured to move the track system 16 relative to the frame 12 of the vehicle 10. The one or more actuators 60 may be implemented in any suitable way. For instance, in some embodiments, an actuator 60 may comprise a fluidic element (e.g., a hydraulic or pneumatic element, such as a hydraulic or pneumatic cylinder), an electromechanical element, etc. In some examples, actuators 60 may be spaced apart from one another to act upon different parts of the track system 16 and/or may be actuatable independently from one another.

In some embodiments, the mounting mechanism 50 may be configured to move the track system 16 relative to the frame 12 of the vehicle 10 in response to a signal. For instance, in some embodiments, this signal, which may be referred to as a "track-system movement signal", may be applied to the one or more actuators 60 of the mounting mechanism 50 to control the one or more actuators 60.

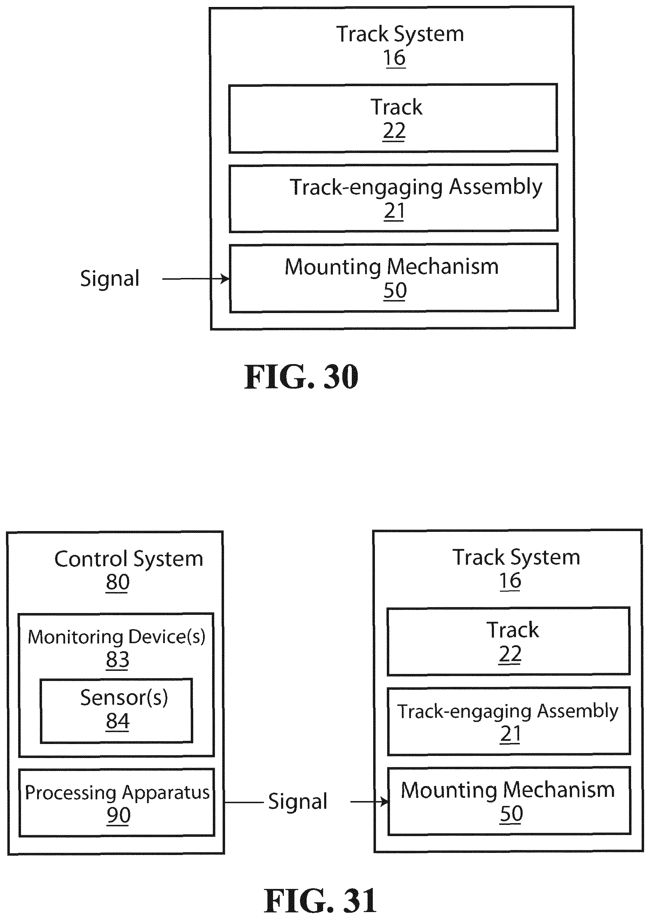

For example, in some embodiments, as shown in Figures 30 and 31, the track-system movement signal may be generated (e.g., automatically) by a control system 80 of the vehicle 10. The control system 80 may generate the track-system movement signal based on various information. For instance, in some embodiments, this may include:
- information regarding a state of the vehicle 10, such as, for example: the speed of the vehicle 10; the acceleration of the vehicle 10 the direction of motion of the vehicle 10; a parameter of a steering mechanism ; a parameter of the powertrain 15 of the vehicle 10 (e.g., a speed of the prime mover 14, a ratio of the transmission, etc.); a load distribution on the vehicle 10 (e.g., loads on respective ones of the track systems 16); and/or any other parameter that pertains to the state of the vehicle 10;
- information regarding an environment of the vehicle 10, such as, for example: a profile (e.g., a slope or steepness or levelness) of the ground; the compliance (e.g., softness or hardness) of the ground; and/or any other parameter that pertains to the environment of the vehicle 10;
- information regarding a state of the track system 16, such as, for example: a speed of the track 22 around the track-engaging assembly 21; a direction of motion of the track 22 around the track-engaging assembly 21; loading on the track system 16; the tension of the track 22; a physical characteristic (e.g., a temperature, etc.) of the track 22; and/or any other parameter that pertains to the state of the track system 16; and/or
- any other information that may be relevant.

In some embodiments, the control system 80 may comprise monitoring devices 83, such as sensors 84 and/or other monitoring devices (e.g., cameras), for sensing and/or otherwise monitoring parameters of the vehicle 10 and/or its environment (e.g., the ground) and a processing apparatus 90 to generate the track-system movement signal based on output of the monitoring devices 83. For example, in some embodiments, the parameters of the vehicle 10 and/or its environment that can be sensed by the monitoring devices 83 may include:
- the speed of the vehicle 10;
- the acceleration of the vehicle 10;
- the direction of motion of the vehicle 10;
- a parameter of the powertrain 15 of the vehicle 10 (e.g., a speed of the prime mover 14, a ratio of the transmission, etc.);
- a load distribution on the vehicle 10 (e.g., loads on respective ones of the track systems 16);
- a suspension parameter (e.g., travel and/or stroke position) of the vehicle 10;
- the loading on the track system 16;
- the profile (e.g., the slope or steepness or the levelness) of the ground beneath the track system 16;
- a type (e.g., a road or a field) of the ground beneath the track system 16;
- the compliance (e.g., softness or hardness) of the ground beneath the track system 16;
- the speed of motion of the track 22 around the track-engaging assembly 21;
- the direction of motion of the track 22 around the track-engaging assembly 21;
- a physical characteristic (e.g., a temperature, etc.) of the track 22 of the track system 16;
- the tension of the track 22;
- etc.

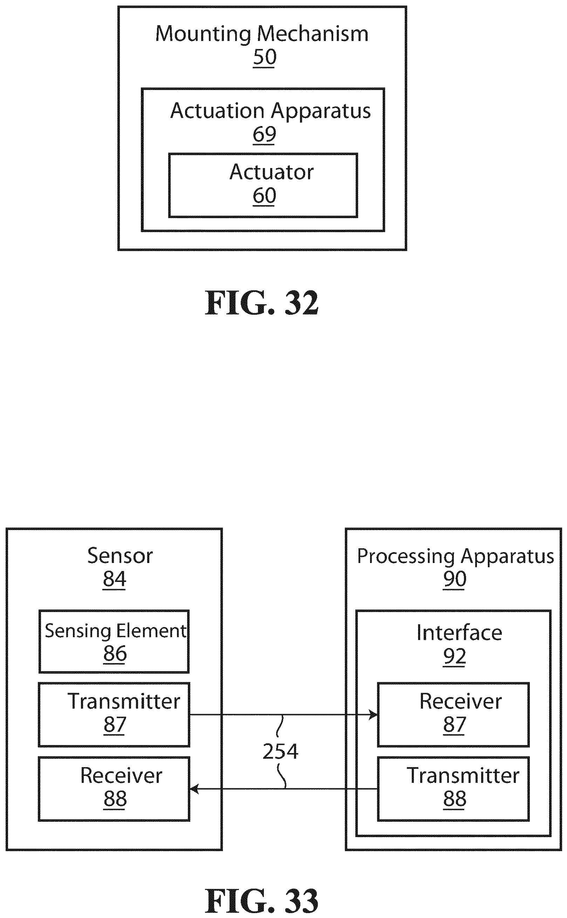

Each sensor 84 may be configured to sense a parameter of the vehicle 10 and issue a signal indicative of that parameter. To that end, with additional reference to Figure 33, the sensor 84 may comprise a sensing element 86 configured to sense the parameter of the vehicle 10 to be sensed. For example, in some embodiments, the sensor 84 may comprise the sensing element 86 to sense:
- the speed of the vehicle 10, e.g., the sensing element 86 may comprise a speedometer of the vehicle 10;
- the acceleration of the vehicle 10, e.g., the sensing element 86 may comprise an accelerometer;
- the direction of motion of the vehicle 10, e.g., the sensing element 86 may comprise a gyroscope;
- the speed of the prime mover 14, e.g., the sensing element 86 may comprise part of a prime mover speed sensor (e.g., engine speed sensor);
- the suspension travel and/or stroke position, e.g., the sensing element 86 may comprise any suitable linear transducers (e.g. one or more linear ruler, one or more linear encoder) and/or any suitable proximity sensors (e.g. one or more proximity switch) and/or any suitable photoelectric sensors (e.g. one or more photocell, one or more laser/light transmitter/receiver);
- the loading on the track system 16, e.g., the sensing element 86 may comprise one or more load cell (e.g. tension and/or compression load cell) or one or more strain gage;
- the profile (e.g., the slope or steepness or the levelness) of the ground beneath the track system 16, e.g., the sensing element 86 may comprise a gyroscope;
- the compliance (e.g., softness or hardness) of the ground beneath the track system 16, e.g., the sensing element 86 may comprise part of a laser sensor or an ultrasound sensor;
- the speed of motion of the track 22 around the track-engaging assembly 21, e.g., the sensing element 86 may comprise a tachometer (e.g., a wheel speed sensor) configured to sense a rotational speed of the drive wheel 24;
- the temperature or another physical characteristic of the track 22 of the track system 16, e.g., the sensing element 86 may comprise a temperature sensor or another sensor for sensing that physical characteristic;
- etc.

In this embodiment, the sensor 84, is configured to communicate the signal indicative of the parameter it senses to the processing apparatus 90 via a communication link 254.

To that end, the sensor 84 comprises a transmitter 87 for transmitting the signal indicative of the parameter it senses to the processing apparatus 90, which comprises a receiver 87 to receive the signal from the sensor 84. The transmitter 87 of the sensor 84, and the receiver 87 of the processing apparatus 90 may establish the link 254 between one another in any suitable way.

In some embodiments, the link 254 may be a wireless link such that the sensor 84 and the processing apparatus 90 are connected wirelessly. Thus, in such embodiments, the transmitter 87 of the sensor 84 is a wireless transmitter that can wirelessly transmit the signal from the sensor 84 and the receiver 87 of the processing apparatus 90 is a wireless receiver that can wirelessly receive the signal.

For example, the transmitter 87 and the receiver 87 may implement radio-frequency identification (RFID) technology. In such an example, the transmitter 87 may be an RFID tag while the receiver 87 may be an RFID reader (e.g., active, passive or batteryassisted passive (BAP) RFID technology). Any other wireless communication technology may be used in other examples (e.g., WiFi, dedicated short-range communication (DSRC), etc.). In other embodiments, the link 254 may be a wired link such that the sensor 84 and the processing apparatus 90 are connected by a wire.

The signal indicative of the parameter of the vehicle 10 sensed by the sensor 84, may be issued by the sensor 84 in any suitable manner. In some embodiments, the sensor 84 is configured to issue the signal autonomously. For instance, the transmitter 87 of the sensor 84 may issue the signal repeatedly (e.g., periodically or at some other predetermined instants). In other embodiments, the processing apparatus 90 may be configured to issue an interrogation signal directed to the sensor 84, which is configured to issue the signal indicative of the parameter of the vehicle 10 that it senses to the processing apparatus 90 in response to the interrogation signal. In such embodiments the processing apparatus 90 may comprise a transmitter 88 to transmit the interrogation signal to the sensor 84, which comprises a receiver 88 to receive the interrogation signal.

The sensors 84, may be located at various locations on the vehicle 10 in various embodiments.

For instance, in some embodiments, one or more of the sensors 84, may be part of the track system 16. For example, in some embodiments, one or more of the sensors 84, may be part of the track 22. For instance, in some embodiments, one or more of the sensors 84, may be embedded in the elastomeric material 32 of the track 22. As an example, in some embodiments, one or more of the sensors 84, may be arranged as discussed in International Application Publication WO/2017/000068, which is hereby incorporated by reference herein.

As another example, in some embodiments, one or more of the sensors 84 may be part of the track-engaging assembly 21. For instance, in some embodiments, one or more of the sensors 84 may be affixed to a given one of the wheels 23, 24, 25, 28 and/or to the frame 13 of the track system 16. As another example, in some embodiments, one or more of the sensors 84 may be part of the mounting mechanism 50 of the track system 16. As another example, in some embodiments, one or more of the sensors 84 may be located outside of the track systems 16. For instance, in some embodiments, one or more of the sensors 84 may be located in the powertrain 15 of the vehicle 10 and/or on the frame 12 of the vehicle 10, etc.

The processing apparatus 90 is configured to generate the track-system movement signal based on information derived from the monitoring devices 83 and possibly other information (e.g., provided by the operator, via the user interface 70). For instance, in some embodiments, the processing apparatus 90 may issue the track-system movement signal as a signal directed to the actuation apparatus 69 of the mounting mechanism 50 to control the one or more actuators 60.

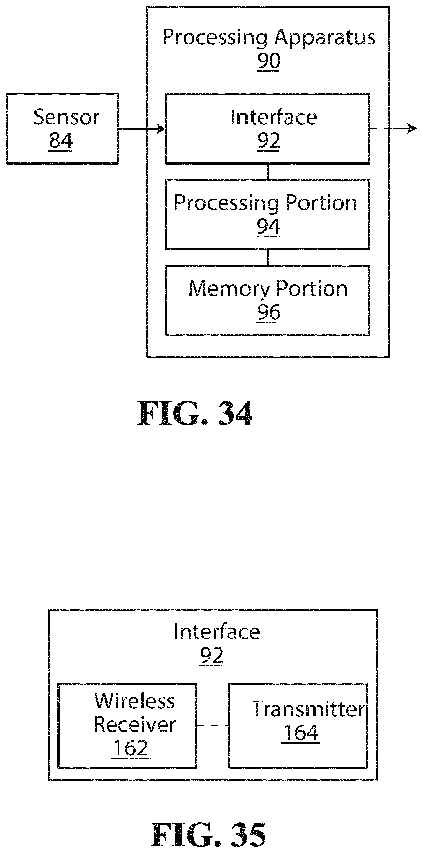

In this embodiment, as shown in Figure 34, the processing apparatus 90 comprises an interface 92, a processing portion 94, and a memory portion 96, which are implemented by suitable hardware and/or software.

The interface 92 comprises one or more inputs and outputs allowing the processing apparatus 90 to receive input signals from and send output signals to other components to which the processing apparatus 90 is connected (i.e., directly or indirectly connected). For example, in this embodiment, an input of the interface 92 is implemented by a receiver 162 to receive the signal from the sensor 84. An output of the interface 92 is implemented by a transmitter 164 to transmit the track-system movement signal to the actuator 60. In some embodiments, another output of the interface 92 is implemented by the transmitter 164 to transmit the interrogation signal to the sensor 84 if applicable.

The processing portion 94 may comprise one or more processors for performing processing operations that implement functionality of the processing apparatus 90. A processor of the processing portion 94 may be a general-purpose processor executing program code stored in the memory portion 96. Alternatively, a processor of the processing portion 94 may be a specific-purpose processor comprising one or more preprogrammed hardware or firmware elements (e.g., application-specific integrated circuits (ASICs), electrically erasable programmable read-only memories (EEPROMs), etc.) or other related elements.

The memory portion 96 may comprise one or more memories for storing program code executed by the processing portion 94 and/or data used during operation of the processing portion 94. A memory of the memory portion 96 may be a semiconductor medium (including, e.g., a solid-state memory), a magnetic storage medium, an optical storage medium, and/or any other suitable type of memory (ROM) and/or randomaccess memory (RAM), for example.

In some embodiments, the processing apparatus 90 may determine the track-system movement signal based on information contained in the memory portion 96.

For instance, the memory portion 96 may contain information associating different values of a parameter relating to the vehicle 10, to the track system 16 and/or to an environment of the vehicle 10, with different values of a given parameter to be controlled in respect of the mounting mechanism 50.

For example, in some embodiments, the memory portion 96 may associate different values of a given one of the speed of the vehicle 10, the direction of motion of the vehicle 10, the suspension travel and/or stroke position, the loading on the track system 16, the profile (e.g., the slope or steepness or the levelness) or the compliance of the ground beneath the track system 16, etc. with a particular value of a parameter (e.g., the length) of the actuator 60 for controlling the mounting mechanism 50.

Thus, the processing apparatus 90 may consult its memory portion 96 in generating the track-system movement signal.

For example, in some embodiments, one or more mode of operations may be preprogrammed, e.g. in the memory portion 96 of the processing apparatus 90, based on information associating different values of a parameter relating to the vehicle 10 with different values of a given parameter to be controlled in respect of the mounting mechanism 50. For instance, one or more preprogrammed mode of operations may be configured such that the operation and/or behavior of the mounting mechanism 50 of the track systems 16 (and/or the vehicle 10) is optimized for running over a given profile or type of ground (e.g. "mud mode", "road mode", "climb mode", "downhill mode"). As another example, one or more preprogrammed mode of operations may be configured to optimize the ride quality (e.g. "comfort mode"), when the vehicle 10 (and thus the track systems 16) rides over rough terrain (e.g. bumpy road/ground). Other preprogrammed mode of operations may be configured for effecting the operation of the mounting mechanism 50 based on any one or more parameters of the vehicle 10, as discussed above.

In some embodiments, two or more elements of the processing apparatus 90 may be implemented by devices that are physically distinct from one another and may be connected to one another via a bus (e.g., one or more electrical conductors or any other suitable bus) or via a communication link which may be wired, wireless, or both. In other embodiments, two or more elements of the processing apparatus 90 may be implemented by a single integrated device.

In other embodiments, the track-system movement signal may be provided based on input from a user, such as the operator of the vehicle 10.

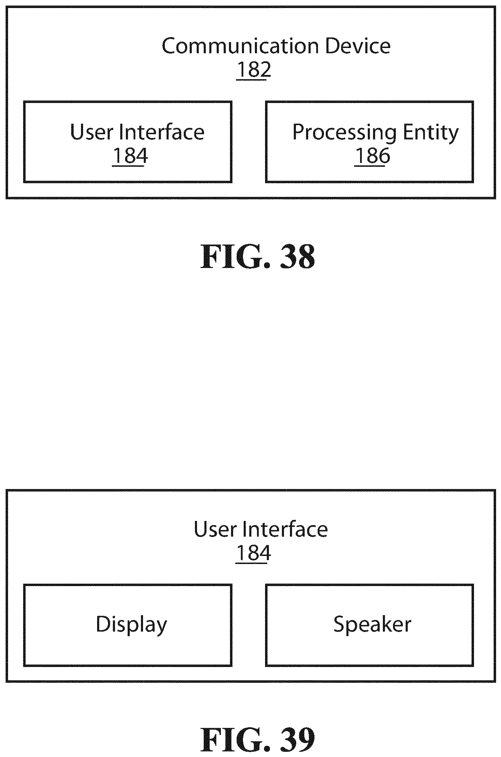

In some embodiments, as shown in Figures 37 and 38 the signal issued by the processing apparatus 90 may be directed to a communication device 182 for conveying information to a user of the communication device 182. More specifically, in this example, the communication device 182 may comprise a user interface 184 for interacting with a user and a processing entity 186 for processing the signal and generate a suitable user interaction depending on the signal. In this embodiment, with additional reference to Figure 39, the user interface 184 comprises a display for displaying the information to the user and a speaker for alerting the user of a notification or an alert.

In some embodiments, the communication device 182 including the user interface 184 may be part of the user interface 70 of the operator cabin 20 of the vehicle 10, as shown in Figure 36, and may also comprise buttons, levers, etc. to facilitate interaction with the user.

In other embodiments, the communication device 182 may be a smartphone or other user device separate from the vehicle 10, as shown in Figure 37. For example, in some embodiments, the communication device 182 may be a smartphone on which an app has been downloaded so as to interact with the control system 80.

In some embodiments, the mounting mechanism 50 may be configured to move the track system 16 relative to the frame 12 of the vehicle 10 in response to an external force applied onto the track system 16, without there necessarily being any signal like the track-system movement signal (e.g., without any sensor 84 or other monitoring device 83). In that sense, the mounting mechanism 50 may be considered to be "passive".

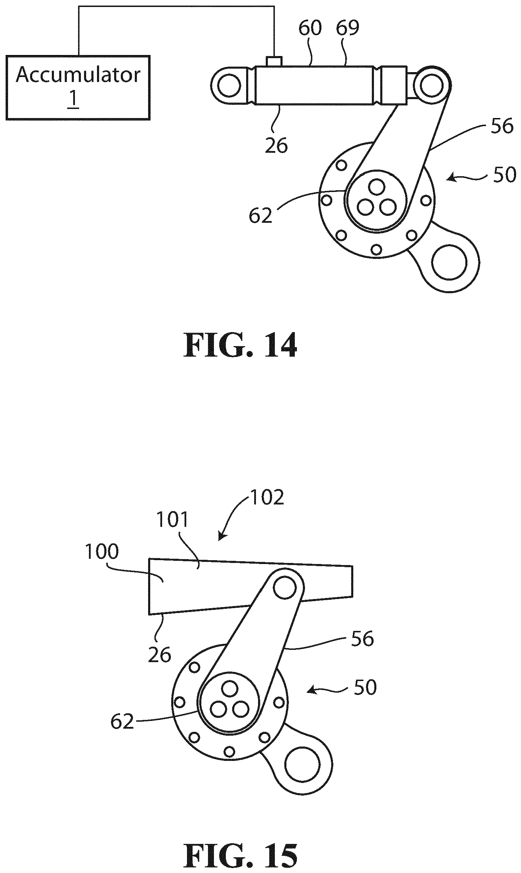

For example, in some embodiments, as shown in Figure 15, the mounting mechanism 50 may comprise an elastomeric control 102 comprising an elastomer 100 and a set of bolster springs 101 which adapt to the different types of load solicitations e.g., speed, force, amplitude to which the vehicle 10 is subjected. More particularly, in this embodiment, the bolster springs 101 are located at a predetermined angle to a vertical axis of the mounting mechanism 50. Thus, in this embodiment, the bolster springs 101 are loaded in both compression and shear. More particularly, in this embodiment, as a payload increases, the bolster springs 101 compress and engage the elastomer 100 which compresses to provide optimum spring deflection (e.g., when the progressive loaded spring is compressed, its stiffness increases, thus providing additional stability to the vehicle 10).

As another example, in other embodiments, the mounting mechanism 50 may comprise a combination of the actuator 60 and the elastomeric control 102 which would act in combination with each other to move the track system 16 relative to the frame 12 of the vehicle 10.

In this embodiment, the mounting mechanism 50 comprises a plurality of mounts 56 spaced apart in the longitudinal direction of the track system 16 to allow movement of the track system 16 relative to the frame 12 of the vehicle 10. Each of the mounts 56 extends from the frame 13 of the track system 16 to the frame 12 of the vehicle 10 in order to interconnect the track system 16 to the frame 12 of the vehicle 10.

More particularly, in this embodiment, each mount 56 comprises a pivot 62 and an actuator 60. The pivot 62 allows the track system 16 to pivot thereabout relative to the frame 12 of the vehicle 10, while the actuator 60 is configured to control pivoting of the track system 16 relative to the frame 12 of the vehicle 10 about the pivot 62 of the mount 56.

The actuators 60 of the mounts 56 are thus spaced apart from one another in the longitudinal direction of the track system 16. In this embodiment, the actuators 60 of the mounts 56 are operable independently from one another. This provides freedom in the movement of the track system 16 relative to the frame 12 of the vehicle 10.

In this embodiment, in order to protect the mounting mechanism 50 (e.g., from impurities that could otherwise cause its malfunction) and/or in order to minimize an envelope and space occupied by the mounting mechanism 50, the actuators 60 of the mounts 56 are contained within the frame 12 of the vehicle 10 in the widthwise direction of the vehicle 10. The actuators 60 thus do not extend beyond lateral sides 110, 120 of the vehicle 10 in the widthwise direction of the vehicle 10. More particularly, in this embodiment, the mounts 56 themselves are contained within a width of the frame 12 in the widthwise direction of the vehicle 10. The mounts 56 therefore do not extend beyond the lateral sides 110, 120 of the vehicle 10 in the widthwise direction of the vehicle 10.

The mounting mechanism 50 may be configured to allow (e.g., control) movement of the track system 16 relative to the frame 12 of the vehicle 10 in various ways.

For example, in some embodiments, the mounting mechanism 50 is configured to control pivoting of the track system 16 about the pivot 62 of a first one of the mounts 56 differently from pivoting of the track system 16 about the pivot 62 of a second one of the mounts 56. For instance, in some embodiments, the mounting mechanism 50 may be configured to control pivoting of the track system 16 about the pivot 62 of a front one of the mounts 56 differently from pivoting of the track system 16 about the pivot 62 of a rear one of the mounts 56. As an example, in some embodiments, the mounting mechanism 50 may be configured to cause pivoting of the track system 16 about the pivot 62 of the front one of the mounts 56 by a different (i.e., greater or lesser) angle than the track system 16 pivots about the pivot 62 of the rear one of the mounts 56. As another example, in some embodiments, the mounting mechanism 50 may be configured to cause pivoting of the track system 16 about the pivot 62 of the front one of the mounts 56 while the track system 16 remains fixed relative to (i.e., does not pivot about) the pivot 62 of the rear one of the mounts 56, or vice versa.

Thus, in some embodiments, the mounting mechanism 50 is configured to control the pivoting of the track system 16 about the pivot 62 of the first one of the mounts 56 independently of the pivoting of the track system 16 about the pivot 62 of the second one of the mounts 56. This may be useful to even a weight distribution of the vehicle 10 on uneven ground and/or for various other purposes.

Alternatively or additionally, in some embodiments, the mounting mechanism 50 may be configured to move the track system 16 in the longitudinal direction of the vehicle 10 relative to a center of gravity of the vehicle 10. Thus, the user may follow the center of gravity of the vehicle 10 while in operation. This may also provide the vehicle 10 with improved tipping capabilities and/or increase loaded reaching heights.

In some embodiments, the mounting mechanism 50 is configured to move the track system 16 relative to the frame 12 of the vehicle 10 from a horizontal plane P1 to a horizontal plane P2 offset from the horizontal plane P1 in the heightwise direction of the vehicle 10. In each of these horizontal planes P1, P2, the track system 16 is horizontal, i.e., level with the ground, so that the bottom run 66 of the track 22 is horizontal. The track system 16 is thus level but higher or lower relative to the frame 12 of the vehicle 10 when in the horizontal plane P1 compared to when in the horizontal plane P2. This may allow the vehicle 10 to increase loading reaching heights and/or improve levelling adjustments for better stability of the vehicle 10.

In some embodiments, the mounting mechanism 50 of a left one of the track systems 16 mounted on the left lateral side 110 of the vehicle 10 and the mounting mechanism 50 of a right one of the track systems 16 mounted on the right lateral side 120 of the vehicle 10 may be configured to control the movement of the left one of the track systems 16 relative to the frame 12 of the vehicle 10 differently from the movement of the right one of the track systems 16 relative to the frame 12 of the vehicle 10.

For example, in some embodiments, the mounting mechanism 50 of the left one of the track systems 16 and the mounting mechanism 50 of the right one of the track systems 16 may be configured to position the left one of the track systems 16 relative to the frame 12 of the vehicle 10 in a horizontal plane P1 and position the right one of the track systems 16 relative to the frame 12 of the vehicle 10 in a horizontal plane P2 offset from the horizontal plane P1 in the heightwise direction of the vehicle 10. In each of these horizontal planes P1, P2, the left and rights ones of the track systems 16 are horizontal, i.e., level with the ground, so that the bottom run 66 of their track 22 is horizontal. The left one of the track systems 16 is thus level but higher or lower relative to the frame 12 of the vehicle 10 than the right one of the track systems 16. This may facilitate travel and/or work by the vehicle 10 when the ground is uneven (e.g., curbs or other different ground levels).

In some embodiments, the mounting mechanism 50 implements a suspension 26 of the track system 16 which can be adjustable by the user or configured depending on the vehicle's 10 operation (e.g., speed, loads etc.). For example, in some embodiments, the mounting mechanism 50 may be configured to alter a behavior of the suspension 26 of the track system 16 to control the movement of the track system 16 relative to the frame 12 of the vehicle 10. In this embodiment, the mounting mechanism 50 is configured to alter stiffness and damping of the suspension 26.

For example, in some embodiments, the track-system movement signal may relate to the adjustment of different parameters of the suspension 26. For instance, in this embodiment, the suspension 26 may comprise a spring 396 and the track-system movement signal is configured to cause the actuator 60 to adjust the preload of the spring 396. For instance, the track-system movement signal may cause the suspension 26 to increase and/or decrease the preload of the spring 396 based on one or more sensed parameters of the track system 16. For example, in this particular embodiment, the actuator 60 is configured to adjust the preload of the spring 396 based at least in part on the speed of motion of the track 22. In some embodiments, the actuator 60 may alternatively or additionally adjust the preload of the spring 396 based on the direction of motion of the track 22, on the compliance of the ground beneath the track system 16, and/or any other suitable parameters relating to the track system 16.

More specifically, in this embodiment, as will be described in more detail below, the actuator 60 is configured to displace a first end of the spring 396 relative to a second end of the spring 396 in a longitudinal direction of the suspension 26 to modify the preload of the spring 396.

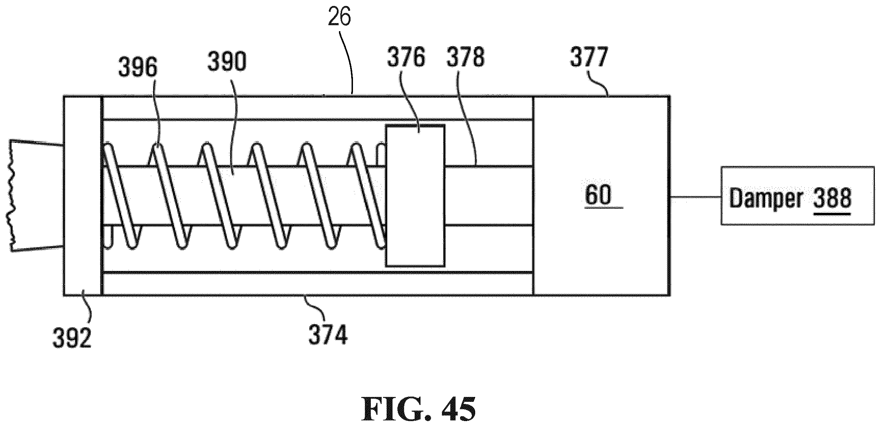

In this embodiment, as shown in Figure 45, the actuator 60 is a linear actuator that is capable of inducing linear motion. The actuator 60 comprises a base 377 including a motor (not shown) that is responsive to the track-system movement signal transmitted by the processing apparatus 90. The actuator 60 further comprises a shaft 378 that is driven by the motor of the actuator 60. Such linear actuators are well known in the art and their operation will thus not be further described here. The base 377 of the actuator 60 is mounted to a mounting bracket 392 of the suspension 26 for support via a plurality of support members 374 that are affixed to the mounting bracket 392 (e.g., via fasteners). An end of the shaft 378 is connected to a support bushing 376 of the suspension 26 which abuts the first end of the spring 396 and is mounted to a stabilizing rod 390.

The shaft 378 is operable to displace the support bushing 376 along the longitudinal direction of the suspension 26 away from or towards the mounting bracket 392 as determined by the track-system movement signal transmitted by the processing apparatus 90. Displacing the support bushing 376 towards the mounting bracket 392 increases the preload of the spring 396 while displacing the support bushing 376 away from the mounting bracket 392 reduces the preload of the spring 396.

In this embodiment, the actuator 60 offers a continuous range of adjustment of the preload of the spring 396. In other words, the support bushing 376 may occupy an infinite number of distinct positions within its range of displacement. As such, the preload of the spring 396 may have one of an infinite number of different values in accordance to the position of the support bushing 376.

In one example of implementation, an elevated speed of the track 22 sensed by the sensor 84 and transmitted to the processing apparatus 90 may cause the processing apparatus 90 to effect an increase of the preload of the spring 396 by signaling the actuator 60 to actuate its shaft 378 to displace the support bushing 376 towards the mounting bracket 392. This may help improve the stability of the track system 16. In another example, a low speed of the track 22 sensed by the sensor 84 and transmitted to the processing apparatus 90 may cause the processing apparatus 90 to effect a reduction of the preload of the spring 396 by signaling the actuator 60 to actuate its drive shaft 378 to displace the support bushing 376 away from the mounting bracket 392. This may help the track system 16 gain traction and/or avoid generating feedback at the steering device of the vehicle 10 (i.e., vibrations at the steering device).

The track-system movement signal issued by the processing apparatus 90 may also relate to the adjustment of other parameters of the suspension 26.

For instance, in some embodiments, the track-system movement signal may be related to the adjustment of a length L_{A} of the suspension 26 based on one or more sensed parameters. To that end, in some embodiments, the track-system movement signal may cause the actuator 60 to displace the rod end along the longitudinal direction of the suspension 26 thus increasing or decreasing the length L_{A} of the suspension 26. For example, the actuator 60 may be operable to selectively increase and decrease the threaded engagement of the rod end with the stabilizing rod 390.

In some embodiments, the track-system movement signal may be related to the adjustment of a stiffness Kt of the spring 396 based on one or more sensed parameters relating to the track system 16 and/or the vehicle 10.

In some embodiments, the track-system movement signal may be related to the adjustment of a stiffness K_{d} of a damper 388 based on one or more sensed parameters relating to the track system 16 and/or the vehicle 10.

In some embodiments, the track-system movement signal may be related to the adjustment of the preload of the damper 388 based on one or more sensed parameters relating to the track system 16 and/or the vehicle 10.

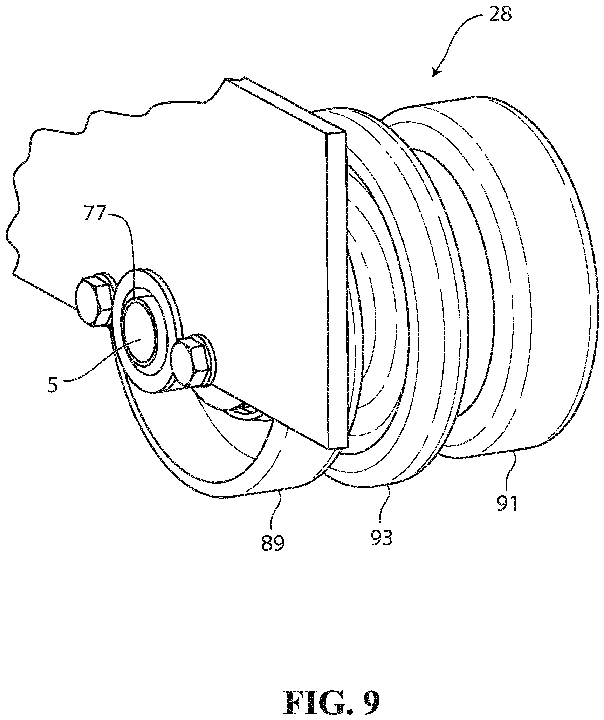

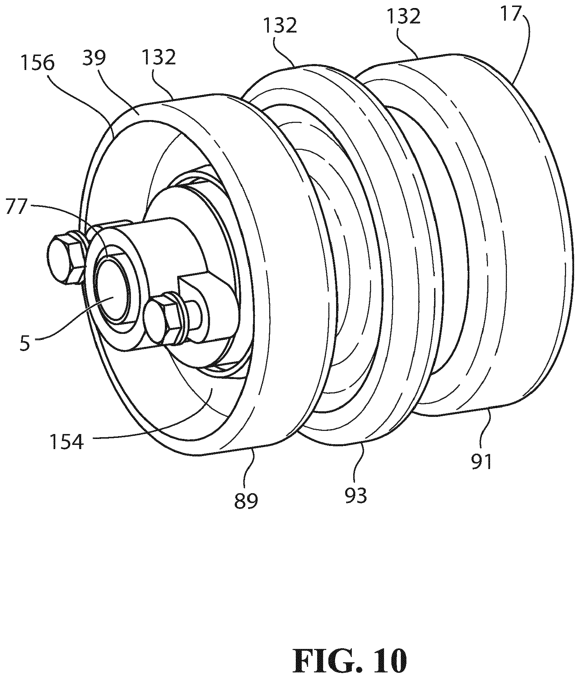

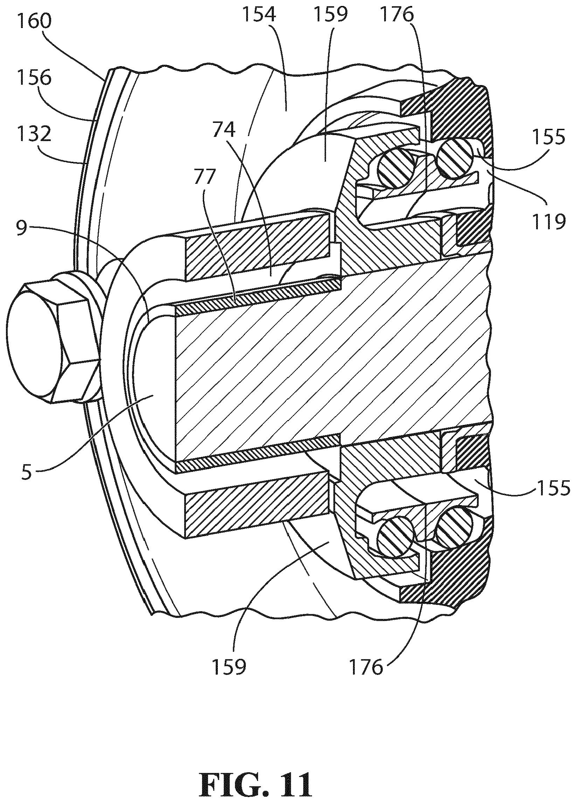

With additional reference to Figures 9 to 11, in some embodiments, the track-engaging assembly 21 comprises axles 5 for given ones of front idler wheel 23, the rear idler wheel 25, and the roller wheels 28 and resilient members 77 receiving the axles 5 and resiliently deformable (e.g., changeable in configuration) about the axles 5. More particularly, in this embodiment, the resilient members 77 comprise an opening 9 sized such that the axles 5 are received therein. In this example, the axles 5 are for the roller wheels 28.

In this embodiment, the resilient members 77 are disposed outside the roller wheels 28 in the widthwise direction of the track system 16. The resilient members 77 thus help to support the axles 5 in a non-cantilevered position.

More particularly, in this embodiment, each roller wheel 28 comprises inboard and outboard lateral sides 39, 17 opposite to one another, and a resilient member 77 is disposed outside the roller wheel 28 in that an adjacent one of these inboard and outboard lateral sides 39, 17 of the roller wheel 28 is disposed between the resilient member 77 and a center of the roller wheel 28 in the widthwise direction of the track system 16.

In this embodiment, inboard ones of the resilient members 77 are disposed adjacent to the inboard lateral sides 39 of the roller wheels 28, while outboard ones of the resilient members 77 are spaced from the inboard ones of the resilient members 77 in the widthwise direction of the track system 16 and disposed adjacent to the outboard lateral sides 17 of the roller wheels 28.

The resilient members 77 are configured to change from a first configuration to a second configuration in response to load and recover the configuration in response to removal of the load to allow movement of the axles 5 of the roller wheels 28 relative to the frame 13 of the track system 16.

In this example, each of the resilient members 77 comprises elastomeric material 74 (e.g., rubber, polyurethane elastomer). For instance, in some embodiments, each of the resilient members 77 may comprise an elastomeric bushing.

In this embodiment, a roller wheel 28 comprises a body 160 comprising a circumferential surface 132 configured to contact the track 22. More particularly, in this embodiment, the body 160 of the roller wheel 28 comprises a first lateral wheel member 89, a second lateral wheel member 91, and a central wheel member 93 that is disposed between and spaced apart from the first lateral wheel member 89 and the second lateral wheel member 91 in the widthwise direction of the track system 16.

More specifically, in this embodiment, the roller wheel 28 comprises a circumferential portion 156, a hub portion 155, and a radially-extending portion 154 between the circumferential portion 156 and the hub portion 155. The hub portion 155 is an inner portion of the roller wheel 28 which is associated with a hub 119 receiving the axle 5 with hub elements 159 affixed (e.g. press-fitted, fastened, screwed, etc.) at each end of the axles 5. For instance, this may be done by fitting or press-fitting bearings 176 into an internal cavity of the hub portion 155 of the roller wheel 28 and fitting or press-fitting the hub elements 159 over the axle 5 such that the hub elements 159 respectively engage the bearings 176 or by any suitable means. The circumferential portion 156 is an outer portion of the roller wheel 28 which rolls on the rolling path 30 of the inner surface 45 of the track 22. The radially-extending portion 154 is an intermediate portion of the roller wheel 28 which extends radially between the hub portion 155 and the circumferential portion 156.

In this embodiment, the body 160 of the roller wheel 28 comprises the wheel members 89, 93, 91 that are spaced from one another and integrally formed with one another. More specifically, in this embodiment, the wheel members 89, 93, 91 are integrally cast with one another. In other embodiments, the wheel members 89, 93, 91 are manufactured separately and then affixed to one another (e.g. by welding).

In this example, each one of the lateral wheel members 89, 91 may be wider in an axial direction of the roller wheel 28 than the central wheel member 93, while the central wheel member 93 may be larger in diameter than each one of the lateral wheel members 89, 91.

The track system 16 may be implemented in various other ways in other embodiments.

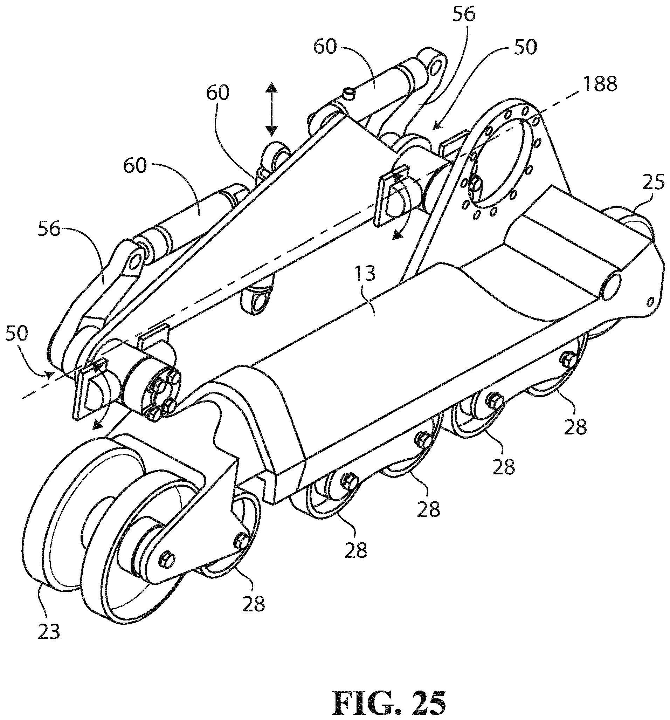

For example, in some embodiments, as shown in Figure 25, the mounting mechanism 50 may be configured to pivot the track system 16 relative to the frame 12 of the vehicle 10 about a pivot axis 188 generally parallel to the longitudinal direction of the track system 16. Thus, the track system 16 may be viewed as having a "roll" capability, with the pivot axis 188 being a "roll" axis. This may allow adjusting a camber of the track system 16.

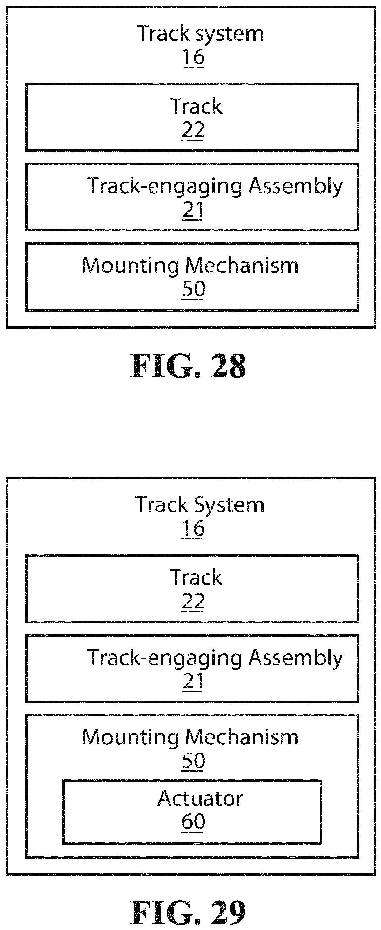

In this embodiment, the pivot axis 188 intersects each of the mounts 56 of the mounting mechanism 50. Also, in this embodiment, an actuator 60 of the actuation apparatus 69 of the mounting mechanism 50 is configured to control pivoting of the track system 16 relative to the frame 12 of the vehicle 10 about the pivot axis 188. In various examples, the actuator 60 may be controlled by the control system 80 of the vehicle 10, based on various information, as described above with reference to Figures 28 to 35, and/or based on input from a user, such as the operator of the vehicle 10, as described above with reference to Figures 36 to 39.

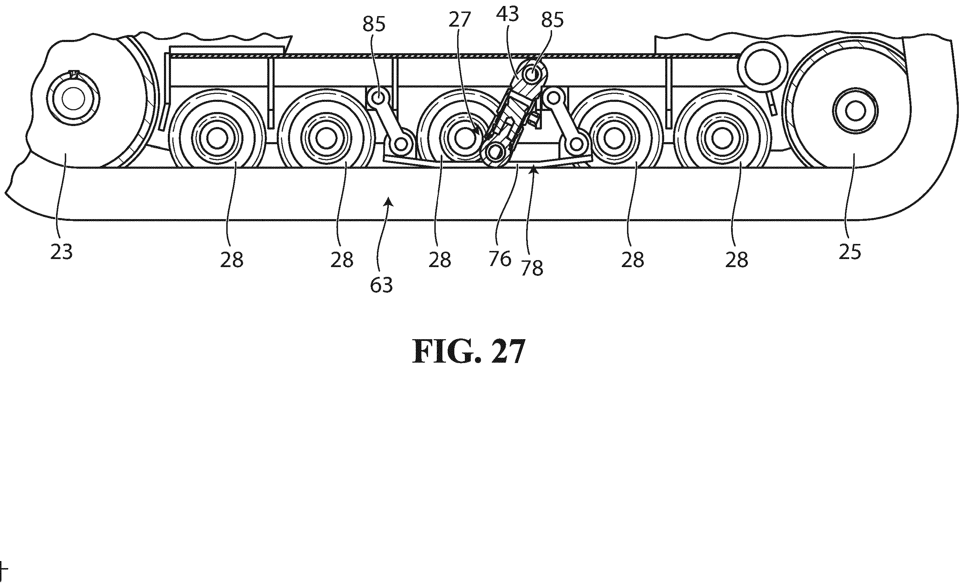

As another example, in some embodiments, as shown in Figure 27, the track-engaging assembly 21 of the track system 16 may comprise a reconfiguration mechanism 27 to alter a shape of the bottom run 66 of the track 22 beneath the roller wheels 28 to vary (e.g., reduce or increase) the contact patch 63 of the track 22 with the ground.

In this embodiment, the reconfiguration mechanism 27 is configured to vary a dimension L1 of the contact patch 63 of the track 22 in the longitudinal direction of the track system 16. Also, in this embodiment, the reconfiguration mechanism 27 is configured to vary a dimension L2 of the contact patch 63 of the track 22 in the widthwise direction of the track system 16.

For example, in this embodiment, the reconfiguration mechanism 27 is configured to reduce the contact patch 63 of the track 22 when the vehicle 10 is turning. This may facilitate turning of the vehicle 10 by reducing turning resistance. For instance, this may facilitate "spot turns".

In this embodiment, the reconfiguration mechanism 27 is configured to increase the contact patch 63 of the track 22 when the vehicle 10 is moving straight, such as when the vehicle 10 is not turning. This may help to increase traction in those circumstances.

More particularly, in this embodiment, the reconfiguration mechanism 27 comprises a track-pressing member 78 configured to press upon the bottom run 66 of the track 22 beneath the roller wheels 28.

In this example, the track-pressing member 78 is thin, elongated and comprises a track-engaging plate 76. The track-pressing member 78 is disposed between and spaced from the front idler wheel 23 and the rear idler wheel 25.

In some embodiments, the track-pressing member 78 occupies less than half of a distance between the axis of rotation of the front idler wheel 23 and the axis of rotation of the rear idler wheel 25. In other embodiments, the track-pressing member 78 occupies less than a third of the distance between the axis of rotation of the front idler wheel 23 and the axis of rotation of the rear idler wheel 25. In other embodiments, the track-pressing member 78 occupies less than a quarter of the distance between the axis of rotation of the front idler wheel 23 and the axis of rotation of the rear idler wheel 25.

In this embodiment, the track-pressing member 78 is movable between an upper position in which the track-pressing member 78 is disposed above a bottom of a given one of the roller wheels 28 and a lower position in which the track-pressing member 78 is disposed at least as low as the bottom of the given one of the roller wheels 28.

More particularly, in this embodiment, the track-pressing member 78 is pivotally mounted to the frame 13 of the track system 16. In this embodiment, the track-pressing member 78 is pivotally mounted to the frame 13 at a plurality of pivots 85 spaced apart in the longitudinal direction of the track system 16.

In this embodiment, the reconfiguration mechanism 27 comprises an actuator 43. The actuator 43 is connected to the track-pressing member 78 between a first one of the pivots 85 and a second one of the pivots 85 in the longitudinal direction of the track system 16.

In some embodiments, the reconfiguration mechanism 27 may be configured to vary one or more dimensions L1, L2 of the contact patch 63 of the track 22 with the ground in response to a signal. This signal, which may be referred to as a "contact-patch variation signal", may be applied to the actuator 43 of the reconfiguration mechanism 27 to control the actuator 43.

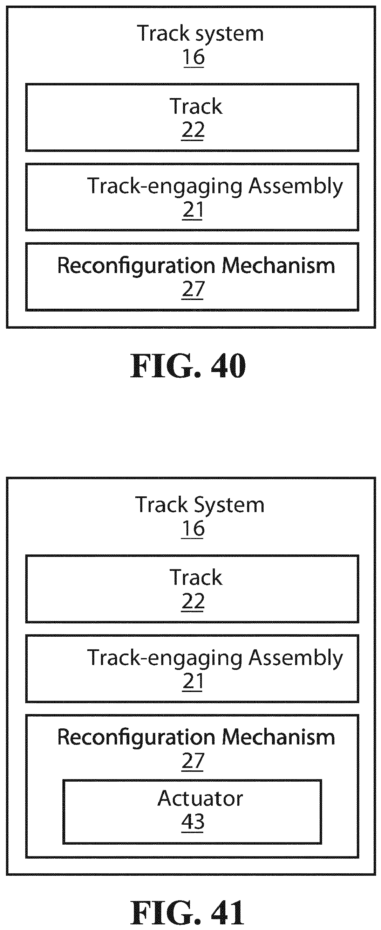

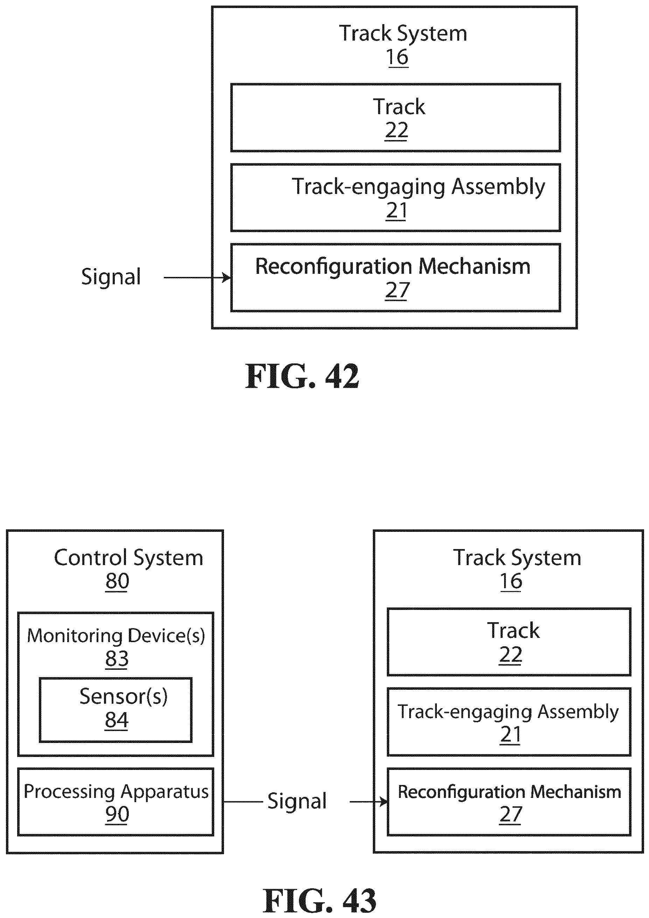

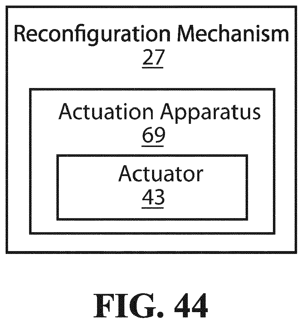

For example, in some embodiments, as shown in Figures 40 to 44 the contact-patch variation signal may be generated (e.g., automatically) by the control system 80 of the vehicle 10, based on various information, as described above in relation to control of the mounting mechanism 50 with reference to Figures 28 to 35.

Additionally, in some embodiments, the contact-patch variation signal may be provided based on input from a user, such as the operator of the vehicle 10, as described above in relation to control of the mounting mechanism 50 with reference to Figures 36 to 39.

In some embodiments, the mounting mechanism 50 may not be located within the width of the frame 12 in the widthwise direction of the vehicle 10, such that the mounting mechanism 50 is exposed to the outside environment.

Although in embodiments considered above the vehicle 10 is operable by a user from the operator cabin 20, in some embodiments, the vehicle 10 may be operable by a user remotely. In some embodiments, the vehicle 10 may comprise autonomy features, allowing the vehicle 10 to be semi-autonomous and/or entirely autonomous. In some embodiments, the vehicle 10 may be free of any operator cabin.

While in embodiments considered above the vehicle 10 is a construction vehicle, in other embodiments, the vehicle 10 may be another industrial vehicle such as an agricultural vehicle (e.g., tractor, harvester, combine, etc.) for performing agricultural work or a forestry vehicle (e.g., a feller-buncher, a tree chipper, a knuckleboom loader, etc.) for performing forestry work, a military vehicle (e.g., a combat engineering vehicle (CEV), etc.) for performing military work, an all-terrain vehicle (ATV), a snowmobile, or any other vehicle operable off paved roads. Although operable off paved roads, the vehicle 10 may also be operable on paved roads in some cases.

In some examples of implementation, any feature of any embodiment described herein may be used in combination with any feature of any other embodiment described herein.

Certain additional elements that may be needed for operation of some embodiments have not been described or illustrated as they are assumed to be within the purview of those of ordinary skill in the art. Moreover, certain embodiments may be free of, may lack and/or may function without any element that is not specifically disclosed herein.

In case of any discrepancy, inconsistency, or other difference between terms used herein and terms used in any document incorporated by reference herein, meanings of the terms used herein are to prevail and be used.

Although various embodiments and examples have been presented, this was for purposes of description, but should not be limiting. Various modifications and enhancements will become apparent to those of ordinary skill in the art.

## Claims

1. A track system for a vehicle on a ground, the track system comprising:
- a track that is elastomeric and comprises a ground-engaging outer surface and an inner surface opposite to the ground-engaging outer surface;
- a track-engaging assembly configured to drive and guide the track around the track-engaging assembly, the track-engaging assembly comprising a plurality of track-contacting wheels and a frame supporting respective ones of the track-contacting wheels; and
- a mounting mechanism configured to mount the frame of the track system to a frame of the vehicle and allow movement of the track system relative to the frame of the vehicle.

2. The track system of claim 1, wherein: the mounting mechanism comprises a plurality of mounts spaced apart in a longitudinal direction of the track system; and each mount comprises a pivot and an actuator configured to control pivoting of the track system relative to the frame of the vehicle about the pivot of the mount.

3. The track system of claim 2, wherein the actuators are operable independently from one another.

4. The track system of any one of claims 2 and 3, wherein the actuators are contained within a width of the frame of the vehicle in a widthwise direction of the vehicle.

5. The track system of any one of claims 2 to 4, wherein the mounting mechanism is configured to control pivoting of the track system about the pivot of a first one of the mounts differently from pivoting of the track system about the pivot of a second one of the mounts.

6. The track system of claim 5, wherein the mounting mechanism is configured to control the pivoting of the track system about the pivot of the first one of the mounts independently of the pivoting of the track system about the pivot of the second one of the mounts.

7. The track system of any one of claims 1 to 6, wherein the mounting mechanism is configured to translate the track system in a longitudinal direction of the vehicle.

8. The track system of any one of claims 1 to 7, wherein the mounting mechanism is configured to translate the track system in a heightwise direction of the vehicle.

9. The track system of any one of claims 1 to 8, wherein the mounting mechanism is configured to move the track system relative to the frame of the vehicle from a first horizontal plane to a second horizontal plane offset from the first horizontal plane in a heightwise direction of the vehicle.

10. The track system of any one of claims 1 to 9, wherein the mounting mechanism is configured to pivot the track system relative to the frame of the vehicle about a pivot axis generally parallel to a longitudinal direction of the track system.

11. The track system of claim 10, wherein the mounting mechanism comprises an actuator configured to control pivoting of the track system relative to the frame of the vehicle about the pivot axis.

12. The track system of any one of claims 1 to 11, wherein the mounting mechanism comprises a suspension of the track system and is configured to alter a behavior of the suspension of the track system to control the movement of the track system relative to the frame of the vehicle.

13. The track system of claim 12, wherein the mounting mechanism is configured to alter stiffness of the suspension.

14. The track system of any one of claims 1 to 13, wherein the mounting mechanism is configured to control the movement of the track system relative to the frame of the vehicle based on a signal.

15. The track system of claim 14, wherein the signal is generated automatically by a processing apparatus.

16. The track system of claim 14, wherein the signal is generated based on input from a user.

17. The track system of any one of claims 1 to 16, wherein the track comprises:
elastomeric material allowing the track to flex around the track-engaging assembly; and a plurality of cores disposed in the elastomeric material, extending transversally to a longitudinal direction of the track, and spaced apart in the longitudinal direction of the track.

18. The track system of any one of claims 1 to 17, wherein: the track-contacting wheels include a drive wheel configured to drive the track, a front idler wheel and a rear idler wheel spaced apart in a longitudinal direction of the track system, and a plurality of roller wheels disposed between the front idler wheel and the rear idler wheel in the longitudinal direction of the track system; and a distance between an axis of rotation of the drive wheel and an axis of rotation of the front idler wheel is different from a distance between the axis of rotation of the drive wheel and an axis of rotation of the rear idler wheel.
